# EUROPEAN PATENT APPLICATION

(11) **EP 4 776 528 A1**
(43) Date of publication of application: **15.07.2026**
(21) Application number: 24870238.3
(22) Date of filing: 22.08.2024
(51) Int. Cl.: H04B 10/071

(54) **DETECTION DEVICE, COMMUNICATION DEVICE, DETECTION METHOD, AND COMMUNICATION SYSTEM**

(30) Priority: 28.09.2023 CN 202311283980
(71) Applicant: HUAWEI TECHNOLOGIES CO., LTD., Shenzhen 518129 (CN)
(72) Inventor: DING, Ding, Shenzhen, Guangdong 518129 (CN); LI, Renqiang, Shenzhen, Guangdong 518129 (CN); FENG, Jia, Shenzhen, Guangdong 518129 (CN)
(74) Representative: MERH-IP Matias Erny Reichl Hoffmann Patentanwälte PartG mbB
(86) International application number: PCT/CN2024/114037
(87) International publication number: WO 2025/066692

(57) **Abstract**

A detection device, a communication device, a detection method, and a communication system, applied to the field of optical path-based communication technologies, are provided, to perform transmission fault detection on an optical transmission path. The optical transmission path includes a local optical module assembly, a plurality of local wavelength division multiplexing optical link groups, a local multiplexer/demultiplexer, and a plurality of remote wavelength division multiplexing optical link groups, that are sequentially coupled. In this solution, based on a feature that detection accuracy of an OTDR detection function is greater than filtering accuracy of the multiplexer/demultiplexer, detection on transmission faults on different optical links coupled to the multiplexer/demultiplexer can be implemented. In the foregoing manner, comprehensive cross-link detection on the different optical links coupled to the multiplexer/demultiplexer can be implemented by using a conventional component that implements optical transmission based on the multiplexer/demultiplexer, without a need for an additional detection component. In this aspect, low-cost, high-accuracy, and comprehensive detection on a transmission fault on the optical transmission path can be implemented, and can be applicable to fronthaul networking in wireless communication and/or optical communication networking.

## Description

This application claims priority to Chinese Patent Application No. 202311283980.6, filed with the China National Intellectual Property Administration on September 28, 2023 and entitled "DETECTION DEVICE, COMMUNICATION DEVICE, DETECTION METHOD, AND COMMUNICATION SYSTEM", which is incorporated herein by reference in its entirety.

### TECHNICAL FIELD

This application relates to the field of communication technologies, and in particular, to a detection device, a communication device, a detection method, and a communication system.

### BACKGROUND

In the field of communication technologies, communication service interaction may be implemented between two communication devices through an optical transmission path. The optical transmission path includes a plurality of local optical splitting links, a main optical link, and a plurality of remote optical splitting links. A local communication device sends a plurality of different or same service optical signals to the main optical link through the plurality of local optical splitting links, the main optical link transmits the plurality of service optical signals to the plurality of remote optical splitting links, and a remote communication device obtains, from the plurality of remote optical splitting links, the service optical signals sent by the local communication device. Alternatively, a remote communication device may also send a plurality of service optical signals to a local communication device through the plurality of remote optical splitting links, the main optical link, and the plurality of local optical splitting links. During actual application, a length of the optical transmission path that needs to be laid varies depending on a distance between the two communication devices. When a transmission fault occurs on the transmission path, it is usually difficult to determine a location at which the transmission fault occurs on the optical transmission path. This causes great difficulty in fault inspection and repair of the optical transmission path, and greatly affects service interaction between the two communication parties.

A manner of detecting a transmission fault on an optical transmission path is: configuring an optical time-domain reflectometer to perform fault detection on an optical link, to detect a location at which the fault occurs. However, this detection method can perform fault detection on only a backbone link. When the optical transmission path includes the backbone link and a plurality of different subordinate links, cross-link fault detection cannot be performed on the different subordinate links.

### SUMMARY

Embodiments of this application provide a detection device, a communication device, a detection method, and a communication system, to comprehensively detect transmission faults at different locations on an optical transmission path.

To achieve the foregoing objectives, the following technical solutions are used in embodiments of this application.

According to a first aspect, a detection device is provided, and is configured to detect a transmission fault on an optical transmission path. The optical transmission path includes a local optical module assembly, a plurality of local wavelength division multiplexing optical link groups, a local multiplexer/demultiplexer, and a plurality of remote wavelength division multiplexing optical link groups, that are sequentially coupled, the plurality of local wavelength division multiplexing optical link groups are coupled to a plurality of filtering ends of the local multiplexer/demultiplexer, a multiplexing end of the local multiplexer/demultiplexer is coupled to the plurality of remote wavelength division multiplexing optical link groups, the local optical module assembly integrates an OTDR detection function, detection accuracy of the OTDR detection function is greater than filtering accuracy of the local multiplexer/demultiplexer, and the detection device is configured to: in response to first alarm information, output different fault indication signals based on whether the local optical module assembly detects a filtering leakage optical signal from the plurality of local wavelength division multiplexing optical link groups based on the OTDR detection function, where the first alarm information indicates that a first local wavelength division multiplexing optical link group in the plurality of local wavelength division multiplexing optical link groups is incapable of exchanging a service optical signal, and the fault indication signal indicates that the transmission fault occurs on the first local wavelength division multiplexing optical link group or the transmission fault occurs on a first remote wavelength division multiplexing optical link group corresponding to the first local wavelength division multiplexing optical link group.

In this embodiment of this application, based on a feature that the detection accuracy of the OTDR detection function is greater than the filtering accuracy of the multiplexer/demultiplexer, the detection device may detect whether a filtering leakage optical signal exists on different links coupled to the multiplexer/demultiplexer, determine, based on a detection result, a specific location of the transmission fault, and output different fault indication signals to indicate an optical link on which the transmission fault is located. In the foregoing manner, the transmission fault can be detected and cross-link detection on different optical links coupled to the multiplexer/demultiplexer can be implemented by using a conventional component that implements optical transmission based on the multiplexer/demultiplexer, without a need for an additional component. In this solution, low-cost, high-accuracy, and comprehensive detection on the transmission fault on the optical transmission path is implemented, and can be applicable to fronthaul networking in wireless communication, to implement comprehensive optical transmission fault detection.

In a possible implementation, the first local wavelength division multiplexing optical link group includes a first local uplink and a first local downlink, the first remote wavelength division multiplexing optical link group includes a first remote uplink and a first remote downlink, and the local optical module assembly integrates the OTDR detection function into any one of local downlinks in the plurality of local wavelength division multiplexing optical link groups. In this case, when the first alarm information is received (the first alarm information indicates that the first local wavelength division multiplexing optical link group in the plurality of local wavelength division multiplexing optical link groups is incapable of exchanging the service optical signal), it is necessary to determine whether the transmission fault occurs at a local end or a remote end, and also necessary to determine whether the transmission fault occurs on an uplink or a downlink. Based on different actual situations, outputting the different fault indication signals based on whether the local optical module assembly detects the filtering leakage optical signal from the plurality of local wavelength division multiplexing optical link groups based on the OTDR detection function may include the following scenarios.

In some examples, the local optical module assembly integrates the OTDR detection function into the any one of the local downlinks in the plurality of local wavelength division multiplexing optical link groups. A first fault indication signal is output when within a first time, a first electrical signal is not received from the local optical module assembly and a first leakage electrical signal is received, where the first fault indication signal indicates that the transmission fault occurs on the first local uplink, the first electrical signal indicates that a first optical signal is input to the local optical module assembly from the first remote uplink and the first local uplink within the first time, and the first leakage electrical signal indicates that the local optical module assembly detects a filtering leakage optical signal of the first optical signal from the any one of the local downlinks based on the OTDR detection function within the first time. In this embodiment of this application, if the first electrical signal is not received within the first time, it is proved that the transmission fault exists on the first local uplink and the first remote uplink. If the first leakage electrical signal is received within the first time, it is proved that the first remote uplink is normal, and the transmission fault occurs on the first local uplink.

In some examples, the local optical module assembly integrates the OTDR detection function into the any one of the local downlinks in the plurality of local wavelength division multiplexing optical link groups. A second fault indication signal is output when a first electrical signal and a first leakage electrical signal are not received from the local optical module assembly within a first time, where the second fault indication signal indicates that the transmission fault occurs on the first remote uplink. In this embodiment of this application, if the first electrical signal is not received within the first time, it is proved that the transmission fault exists on the first local uplink and the first remote uplink. If the first leakage electrical signal is not received within the first time, it is proved that the first remote uplink fails to transmit a first optical signal, and the transmission fault occurs on the first local uplink.

In some examples, the local optical module assembly integrates the OTDR detection function into a second local downlink of a second local wavelength division multiplexing optical link group. The local optical module assembly is controlled, within a second time after a first time, to output a first detection optical signal to the first local downlink. A third fault indication signal is output when a first electrical signal is received from the local optical module assembly within the first time and a second leakage electrical signal is received from the local optical module assembly within the second time, where the third fault indication signal indicates that the transmission fault occurs on the first remote downlink, the first electrical signal indicates that a first optical signal is input to the local optical module assembly from the first remote uplink and the first local uplink within the first time, and the second leakage electrical signal indicates that the local optical module assembly detects a filtering leakage optical signal of the first detection optical signal from the second local downlink based on the OTDR detection function within the second time. In this embodiment of this application, if the first electrical signal is received within the first time, it is proved that the first local uplink and the first remote uplink normally transmit the first optical signal, and the transmission fault exists between the first local downlink and the first remote downlink. If the second leakage electrical signal is received within the second time, it is proved that the first local downlink normally transmits the first detection optical signal, and the transmission fault occurs on the first local downlink.

In some examples, the local optical module assembly integrates the OTDR detection function into a second local downlink of a second local wavelength division multiplexing optical link group. A fourth fault indication signal is output when a first electrical signal is received from the local optical module assembly within a first time and a second leakage electrical signal is not received from the local optical module assembly within a second time, where the fourth fault indication signal indicates that the transmission fault occurs on the first local downlink. In this embodiment of this application, if the first electrical signal is received within the first time, it is proved that the first local uplink and the first remote uplink normally transmit a first optical signal, and the transmission fault exists between the first local downlink and the first remote downlink. If the second leakage electrical signal is not received within the second time, it is proved that the first local downlink fails to transmit a first detection optical signal, and the transmission fault occurs on the first local downlink.

In some examples, the local optical module assembly integrates the OTDR detection function into the first local downlink. When a first electrical signal is received from the local optical module assembly within a first time, the local optical module assembly is controlled, within a second time after the first time, to send a second detection optical signal to the first local downlink, where the first electrical signal indicates that a first optical signal is input to the local optical module assembly from the first remote uplink and the first local uplink within the first time. A first detection electrical signal is input from the local optical module assembly, where the first detection electrical signal is an electrical signal obtained by the local optical module assembly based on the OTDR detection function and a first echo optical signal, and the first echo optical signal is an echo optical signal of the second detection optical signal. A fifth fault indication signal is output based on the first detection electrical signal, where the fifth fault indication signal indicates a location at which the transmission fault occurs on the first remote downlink, or indicates a location at which the transmission fault occurs on the first local downlink. In this embodiment of this application, when the first electrical signal is received within the first time, it is proved that the first local uplink and the first remote uplink normally transmit the first optical signal, and the transmission fault exists between the first local downlink and the first remote downlink. Because the OTDR detection function is integrated into the first local downlink, a location at which the transmission fault occurs on the first local downlink or the first remote downlink may be directly determined by using the OTDR detection function.

In some possible implementations, the local wavelength division multiplexing optical link group and the remote wavelength division multiplexing optical link group may use uplink/downlink multiplexing links to implement exchange between an uplink optical signal and a downlink optical signal. In this case, the first local wavelength division multiplexing optical link group includes a first local uplink/downlink multiplexing link, and the first remote wavelength division multiplexing optical link group includes a first remote uplink/downlink multiplexing link. In this application scenario, whether the transmission fault occurs at a local end or a remote end needs to be detected and determined. Based on different actual situations, outputting the different fault indication signals based on whether the local optical module assembly detects the filtering leakage optical signal from the plurality of local wavelength division multiplexing optical link groups based on the OTDR detection function may include the following cases.

In some examples, the first local wavelength division multiplexing optical link group includes the first local uplink/downlink multiplexing link, the first remote wavelength division multiplexing optical link group includes the first remote uplink/downlink multiplexing link, and the local optical module assembly integrates the OTDR detection function into a second local uplink/downlink multiplexing link of a second local wavelength division multiplexing optical link group. In this case, the local optical module assembly is controlled to send a third detection optical signal to the first local uplink/downlink multiplexing link. When a third leakage electrical signal is received from the local optical module assembly, a sixth fault indication signal is output, where the sixth fault indication signal indicates that the transmission fault occurs on the first remote uplink/downlink multiplexing link, and the third leakage electrical signal indicates that the local optical module assembly detects a filtering leakage optical signal of the third detection optical signal from the second local uplink/downlink multiplexing link based on the OTDR detection function. In this embodiment of this application, when the first alarm information appears, the third detection optical signal may be sent to the first local uplink/downlink multiplexing link. If the OTDR detection function integrated into the second local uplink/downlink multiplexing link can detect the filtering leakage optical signal of the third detection optical signal from the second local uplink/downlink multiplexing link, it is proved that the first local uplink/downlink multiplexing link can normally transmit the third detection optical signal, and it may be determined that the transmission fault occurs on the first remote uplink/downlink multiplexing link.

In some examples, the first local wavelength division multiplexing optical link group includes the first local uplink/downlink multiplexing link, the first remote wavelength division multiplexing optical link group includes the first remote uplink/downlink multiplexing link, and the local optical module assembly integrates the OTDR detection function into a second local uplink/downlink multiplexing link of a second local wavelength division multiplexing optical link group. In this case, the local optical module assembly is controlled to send a third detection optical signal to the first local uplink/downlink multiplexing link. A seventh fault indication signal is output when a third leakage electrical signal is not received from the local optical module assembly, where the seventh fault indication signal indicates that the transmission fault occurs on the first local uplink/downlink multiplexing link. In this embodiment of this application, when a filtering leakage optical signal of the third detection optical signal is not detected from the second local uplink/downlink multiplexing link, it is proved that the first local uplink/downlink multiplexing link cannot normally transmit the third detection optical signal, and it may be determined that the transmission fault occurs on the first local uplink/downlink multiplexing link.

In a possible implementation, the detection device is a communication device. The detection device is further configured to: exchange the service optical signal through the optical transmission path; and in response to the first alarm information, stop exchanging the service optical signal. In this embodiment of this application, a local communication device may be used as the detection device. In this case, the detection device may further stop exchanging the service optical signal, to reduce detection on a filtering leakage optical signal, thereby improving accuracy of transmission fault detection.

In a possible implementation, the detection device is an optical monitoring device. The local optical module assembly is further coupled to a communication device. The communication device exchanges the service optical signal through the optical transmission path. The detection device is further configured to: in response to the first alarm information, output a first control signal to the communication device, where the first control signal is used to control the communication device to stop exchanging the service optical signal. In this embodiment of this application, when the detection device is an independent device other than a local communication device, the local communication device may stop exchanging the service optical signal in response to the first alarm information, or the detection device may send the first control signal to the local communication device to control the communication device to stop exchanging the service optical signal. This improves transmission accuracy of detecting a transmission fault.

In a possible implementation, the optical transmission path further includes a main optical link. The multiplexing end of the local multiplexer/demultiplexer is coupled to the plurality of remote wavelength division multiplexing optical link groups through the main optical link. The local optical module assembly integrates the OTDR detection function into any one of the local downlinks in the plurality of local wavelength division multiplexing optical link groups. The detection device is further configured to: in response to second alarm information, control the local optical module assembly to send a fourth detection optical signal to the any one of the local downlinks, where the second alarm information indicates that none of the plurality of local wavelength division multiplexing optical link groups and the plurality of remote wavelength division multiplexing optical link groups are capable of exchanging the service optical signal; input a second detection electrical signal from the local optical module assembly, where the second detection electrical signal is an electrical signal obtained by the local optical module assembly based on the OTDR detection function and a second echo optical signal, and the second echo optical signal is an echo optical signal of the fourth detection optical signal; and output an eighth fault indication signal based on the second detection electrical signal, where the eighth fault indication signal indicates a location at which the transmission fault occurs on the main optical link. In this embodiment of this application, when none of wavelength division multiplexing optical link groups are capable of exchanging the service optical signal, it indicates that the transmission fault occurs on the main optical link. In this case, the transmission fault on the main optical link may be directly detected and located based on the integrated OTDR detection function.

According to a second aspect, an embodiment of this application further provides a communication device, configured to exchange a service optical signal through an optical transmission path. The optical transmission path includes a first optical module assembly, a plurality of first wavelength division multiplexing optical link groups, a multiplexer/demultiplexer, and a plurality of second wavelength division multiplexing optical link groups, that are sequentially coupled. Each first wavelength division multiplexing optical link group includes a first uplink and a first downlink. The communication device is configured to: in response to alarm information, control, within a first time, the first optical module assembly to send a first optical signal to an uplink of a first optical splitting link group in the plurality of first wavelength division multiplexing optical link groups, where the alarm information indicates that the optical splitting link group in the plurality of first wavelength division multiplexing optical link groups is incapable of exchanging the service optical signal.

For example, the first optical module assembly is the remote optical module assembly in the first aspect, and the plurality of first wavelength division multiplexing optical link groups are the plurality of remote wavelength division multiplexing optical link groups in the first aspect. The foregoing first optical splitting link group is the first remote wavelength division multiplexing optical link group that is in the plurality of wavelength division multiplexing optical link groups in the first aspect and that is incapable of exchanging the service optical signal. In this embodiment of this application, when the first remote wavelength division multiplexing optical link group in the plurality of remote wavelength division multiplexing optical link groups is incapable of exchanging the service optical signal, the communication device controls, within the first time after receiving remote alarm information, the remote optical module assembly to send the first optical signal to a first remote uplink of the first remote wavelength division multiplexing optical link group in the first aspect. The first optical signal assists the detection device in the first aspect in detecting a location of a transmission fault.

In a possible implementation, the communication device is further configured to: in response to the alarm information, stop exchanging the service optical signal. In this embodiment of this application, when the detection device in the first aspect needs to perform transmission fault detection, both communication parties stop exchanging the service optical signal, so that accuracy of transmission fault detection can be improved.

According to a third aspect, an embodiment of this application further provides a detection method, for detecting a transmission fault on an optical transmission path. The optical transmission path includes a local optical module assembly, a plurality of local wavelength division multiplexing optical link groups, a local multiplexer/demultiplexer, and a plurality of remote wavelength division multiplexing optical link groups, that are sequentially coupled, the plurality of local wavelength division multiplexing optical link groups are coupled to a plurality of filtering ends of the local multiplexer/demultiplexer, a multiplexing end of the local multiplexer/demultiplexer is coupled to the plurality of remote wavelength division multiplexing optical link groups, the local optical module assembly integrates an OTDR detection function, detection accuracy of the OTDR detection function is greater than filtering accuracy of the local multiplexer/demultiplexer, and the method includes: in response to first alarm information, obtaining different fault indication signals based on whether the local optical module assembly detects a filtering leakage optical signal from the plurality of local wavelength division multiplexing optical link groups based on the OTDR detection function, where the first alarm information indicates that a first local wavelength division multiplexing optical link group in the plurality of local wavelength division multiplexing optical link groups is incapable of exchanging a service optical signal, and the fault indication signal indicates that the transmission fault occurs on the first local wavelength division multiplexing optical link group or the transmission fault occurs on a first remote wavelength division multiplexing optical link group corresponding to the first local wavelength division multiplexing optical link group.

In a possible implementation, the first local wavelength division multiplexing optical link group includes a first local uplink and a first local downlink, the first remote wavelength division multiplexing optical link group includes a first remote uplink and a first remote downlink, and the local optical module assembly integrates the OTDR detection function into any one of local downlinks in the plurality of local wavelength division multiplexing optical link groups. In this case, when the first alarm information is received (the first alarm information indicates that the first local wavelength division multiplexing optical link group in the plurality of local wavelength division multiplexing optical link groups is incapable of exchanging the service optical signal), it is necessary to determine whether the transmission fault occurs at a local end or a remote end, and also necessary to determine whether the transmission fault occurs on an uplink or a downlink. Based on different actual situations, outputting the different fault indication signals based on whether the local optical module assembly detects the filtering leakage optical signal from the plurality of local wavelength division multiplexing optical link groups based on the OTDR detection function may include the following scenarios.

In some examples, the local optical module assembly integrates the OTDR detection function into any one of the local downlinks in the plurality of local wavelength division multiplexing optical link groups. A first fault indication signal is output when within a first time, a first electrical signal is not received from the local optical module assembly and a first leakage electrical signal is received, where the first fault indication signal indicates that the transmission fault occurs on the first local uplink, the first electrical signal indicates that a first optical signal is input to the local optical module assembly from the first remote uplink and the first local uplink within the first time, and the first leakage electrical signal indicates that the local optical module assembly detects a filtering leakage optical signal of the first optical signal from the any one of the local downlinks based on the OTDR detection function within the first time.

In some examples, the local optical module assembly integrates the OTDR detection function into the any one of the local downlinks in the plurality of local wavelength division multiplexing optical link groups. A second fault indication signal is output when a first electrical signal and a first leakage electrical signal are not received from the local optical module assembly within a first time, where the second fault indication signal indicates that the transmission fault occurs on the first remote uplink. In this embodiment of this application, if the first electrical signal is not received within the first time, it is proved that the transmission fault exists on the first local uplink and the first remote uplink. If the first leakage electrical signal is not received within the first time, it is proved that the first remote uplink fails to transmit a first optical signal, and the transmission fault occurs on the first local uplink.

In some examples, the local optical module assembly integrates the OTDR detection function into a second local downlink of a second local wavelength division multiplexing optical link group. The local optical module assembly is controlled, within a second time after a first time, to output a first detection optical signal to the first local downlink. A third fault indication signal is output when a first electrical signal is received from the local optical module assembly within the first time and a second leakage electrical signal is received from the local optical module assembly within the second time, where the third fault indication signal indicates that the transmission fault occurs on the first remote downlink, the first electrical signal indicates that the first optical signal is input to the local optical module assembly from the first remote uplink and the first local uplink within the first time, and the second leakage electrical signal indicates that the local optical module assembly detects a filtering leakage optical signal of the first detection optical signal from the second local downlink based on the OTDR detection function within the second time.

In some examples, the local optical module assembly integrates the OTDR detection function into a second local downlink of a second local wavelength division multiplexing optical link group. A fourth fault indication signal is output when a first electrical signal is received from the local optical module assembly within the first time and a second leakage electrical signal is not received from the local optical module assembly within the second time, where the fourth fault indication signal indicates that the transmission fault occurs on the first local downlink.

In some examples, the local optical module assembly integrates the OTDR detection function into the first local downlink. When a first electrical signal is received from the local optical module assembly within a first time, the local optical module assembly is controlled, within a second time after the first time, to send a second detection optical signal to the first local downlink, where the first electrical signal indicates that a first optical signal is input to the local optical module assembly from the first remote uplink and the first local uplink within the first time. A first detection electrical signal is input from the local optical module assembly, where the first detection electrical signal is an electrical signal obtained by the local optical module assembly based on the OTDR detection function and a first echo optical signal, and the first echo optical signal is an echo optical signal of the second detection optical signal. A fifth fault indication signal is output based on the first detection electrical signal, where the fifth fault indication signal indicates a location at which the transmission fault occurs on the first remote downlink, or indicates a location at which the transmission fault occurs on the first local downlink.

In some possible implementations, the local wavelength division multiplexing optical link group and the remote wavelength division multiplexing optical link group may use uplink/downlink multiplexing links to implement exchange between an uplink optical signal and a downlink optical signal. In this case, the first local wavelength division multiplexing optical link group includes a first local uplink/downlink multiplexing link, and the first remote wavelength division multiplexing optical link group includes a first remote uplink/downlink multiplexing link. In this application scenario, whether the transmission fault occurs at a local end or a remote end needs to be detected and determined. Based on different actual situations, outputting the different fault indication signals based on whether the local optical module assembly detects the filtering leakage optical signal from the plurality of local wavelength division multiplexing optical link groups based on the OTDR detection function may include the following cases.

In some examples, the first local wavelength division multiplexing optical link group includes the first local uplink/downlink multiplexing link, the first remote wavelength division multiplexing optical link group includes the first remote uplink/downlink multiplexing link, and the local optical module assembly integrates the OTDR detection function into a second local uplink/downlink multiplexing link of a second local wavelength division multiplexing optical link group. In this case, the local optical module assembly is controlled to send a third detection optical signal to the first local uplink/downlink multiplexing link. When a third leakage electrical signal is received from the local optical module assembly, a sixth fault indication signal is output, where the sixth fault indication signal indicates that the transmission fault occurs on the first remote uplink/downlink multiplexing link, and the third leakage electrical signal indicates that the local optical module assembly detects a filtering leakage optical signal of the third detection optical signal from the second local uplink/downlink multiplexing link based on the OTDR detection function.

In some examples, the first local wavelength division multiplexing optical link group includes the first local uplink/downlink multiplexing link, the first remote wavelength division multiplexing optical link group includes the first remote uplink/downlink multiplexing link, and the local optical module assembly integrates the OTDR detection function into a second local uplink/downlink multiplexing link of a second local wavelength division multiplexing optical link group. In this case, the local optical module assembly is controlled to send a third detection optical signal to the first local uplink/downlink multiplexing link. A seventh fault indication signal is output when a third leakage electrical signal is not received from the local optical module assembly, where the seventh fault indication signal indicates that the transmission fault occurs on the first local uplink/downlink multiplexing link.

In a possible implementation, the method is performed based on a communication device, and the method further includes: in response to the first alarm information, stop exchanging the service optical signal.

In a possible implementation, the method is performed based on an optical monitoring device, and the method further includes: in response to the first alarm information, outputting a first control signal to a communication device, where the first control signal is used to control the communication device to stop exchanging the service optical signal.

In a possible implementation, the optical transmission path further includes a main optical link, the multiplexing end of the local multiplexer/demultiplexer is coupled to the plurality of remote wavelength division multiplexing optical link groups through the main optical link, the local optical module assembly integrates the OTDR detection function into any one of the local downlinks in the plurality of local wavelength division multiplexing optical link groups, and the method further includes: in response to second alarm information, controlling the local optical module assembly to send a fourth detection optical signal to the any one of the local downlinks, where the second alarm information indicates that none of the plurality of local wavelength division multiplexing optical link groups and the plurality of remote wavelength division multiplexing optical link groups are capable of exchanging the service optical signal; inputting a second detection electrical signal from the local optical module assembly, where the second detection electrical signal is an electrical signal obtained by the local optical module assembly based on the OTDR detection function and a second echo optical signal, and the second echo optical signal is an echo optical signal of the fourth detection optical signal; and obtaining an eighth fault indication signal based on the second detection electrical signal, where the eighth fault indication signal indicates a location at which the transmission fault occurs on the main optical link.

According to a fourth aspect, an embodiment of this application further provides a detection method, based on a communication device. The communication device is configured to exchange a service optical signal through an optical transmission path. The optical transmission path includes a first optical module assembly, a plurality of first wavelength division multiplexing optical link groups, a multiplexer/demultiplexer, and a plurality of second wavelength division multiplexing optical link groups, that are sequentially coupled. Each local wavelength division multiplexing optical link group includes a local uplink and a local downlink. The method includes: in response to alarm information, controlling, within a first time, the first optical module assembly to send a first optical signal to an uplink of a first optical splitting link group in the plurality of first wavelength division multiplexing optical link groups, where the alarm information indicates that the optical splitting link group in the plurality of first wavelength division multiplexing optical link groups is incapable of exchanging the service optical signal.

In a possible implementation, the method further includes: in response to the alarm information, stopping exchanging the service optical signal.

According to a fifth aspect, an embodiment of this application further provides a communication system. The communication system includes a detection device and an optical transmission path. The optical transmission path includes a local optical module assembly, a plurality of local wavelength division multiplexing optical link groups, a local multiplexer/demultiplexer, a plurality of remote wavelength division multiplexing optical link groups, and a remote optical module assembly that are sequentially coupled, the plurality of local wavelength division multiplexing optical link groups are coupled to a plurality of filtering ends of the local multiplexer/demultiplexer, a multiplexing end of the local multiplexer/demultiplexer is coupled to the plurality of remote wavelength division multiplexing optical link groups, the local optical module assembly integrates an OTDR detection function, and detection accuracy of the OTDR detection function is greater than filtering accuracy of the local multiplexer/demultiplexer. The optical transmission path is used for exchanging a service optical signal. The detection device is configured to: exchange the service optical signal with a remote communication device; and in response to local alarm information, output different fault indication signals based on whether the local optical module assembly detects a filtering leakage optical signal from the plurality of local wavelength division multiplexing optical link groups based on the OTDR detection function, where the local alarm information indicates that a first local wavelength division multiplexing optical link group in the plurality of local wavelength division multiplexing optical link groups is incapable of exchanging the service optical signal, and the fault indication signal indicates that a transmission fault occurs on the first local wavelength division multiplexing optical link group or a transmission fault occurs on a first remote wavelength division multiplexing optical link group corresponding to the first local wavelength division multiplexing optical link group.

In a possible implementation, the first local wavelength division multiplexing optical link group includes a first local uplink and a first local downlink, the first remote wavelength division multiplexing optical link group includes a first remote uplink and a first remote downlink, the local optical module assembly integrates the OTDR detection function into any one of local downlinks in the plurality of local wavelength division multiplexing optical link groups, the communication system further includes the remote communication device and a remote optical module, and the remote communication device is coupled to the plurality of remote wavelength division multiplexing optical link groups through the remote optical module. The remote communication device is configured to: in response to remote alarm information, control, within a first time, the remote optical module assembly to send a first optical signal to the first remote uplink, where the remote alarm information indicates that the first remote wavelength division multiplexing optical link group is incapable of exchanging the service optical signal. The detection device is configured to: in response to the local alarm information, output the different fault indication signals; and output a first fault indication signal when within the first time, a first electrical signal is not received from the local optical module assembly and a first leakage electrical signal is received, where the first fault indication signal indicates that the transmission fault occurs on the first remote uplink, the first electrical signal indicates that the first optical signal is input to the local optical module assembly from the first remote uplink and the first local uplink, and the first leakage electrical signal indicates that the local optical module assembly detects a filtering leakage optical signal of the first optical signal from the any one of the local downlinks based on the OTDR detection function; or output a second fault indication signal when a first electrical signal and a first leakage electrical signal are not received from the local optical module assembly within the first time, where the second fault indication signal indicates that the transmission fault occurs on the first local uplink.

In a possible implementation, the first local wavelength division multiplexing optical link group includes a first local uplink and a first local downlink, the first remote wavelength division multiplexing optical link group includes a first remote uplink and a first remote downlink, and the local optical module assembly integrates the OTDR detection function into a second local downlink of a second local wavelength division multiplexing optical link group. The remote communication device is configured to: in response to remote alarm information, control, within a first time, the remote optical module assembly to send a first optical signal to the first remote uplink, where the remote alarm information indicates that the first remote wavelength division multiplexing optical link group is incapable of exchanging the service optical signal. The detection device is configured to: in response to the local alarm information, control, within a second time after the first time, the local optical module assembly to output a first detection optical signal to the first local downlink; and output a third fault indication signal when a first electrical signal is received from the local optical module assembly within the first time and a second leakage electrical signal is received from the local optical module assembly within the second time, where the third fault indication signal indicates that the transmission fault occurs on the first remote downlink, the first electrical signal indicates that the first optical signal is input to the local optical module assembly from the first remote uplink and the first local uplink within the first time, and the second leakage electrical signal indicates that the local optical module assembly detects a filtering leakage optical signal of the first detection optical signal from the second local downlink based on the OTDR detection function within the second time; or output a fourth fault indication signal when a first electrical signal is received from the local optical module assembly within the first time and a second leakage electrical signal is not received from the local optical module assembly within the second time, where the fourth fault indication signal indicates that the transmission fault occurs on the first local downlink.

In a possible implementation, the detection device is a local communication device, and the detection device is further configured to: in response to the local alarm information, stop exchanging the service optical signal with the optical transmission path.

In a possible implementation, the detection device is an optical monitoring device. The communication system further includes a local communication device. The detection device is further configured to: in response to the local alarm information, output a first control signal to the local communication device, where the first control signal is used to control the communication device to stop exchanging the service optical signal.

According to a sixth aspect, an embodiment of this application further provides a computer-readable storage medium. The computer-readable storage medium includes instructions. When the instructions are run on a processor, the processor is enabled to perform the method recorded in the third aspect, or perform the method recorded in the fourth aspect.

For technical principles and beneficial effects of the second aspect, the third aspect, the fourth aspect, the fifth aspect, and the sixth aspect, refer to related descriptions in the first aspect. Details are not described again.

### BRIEF DESCRIPTION OF DRAWINGS

FIG. 1 is a diagram of a structure of performing transmission fault detection on a single link based on an OTDR;
FIG. 2 is a diagram of a structure of performing transmission fault detection on a plurality of links based on an OTDR;
FIG. 3 is a diagram 1 of a structure of a communication system according to an embodiment of this application;
FIG. 4 is a diagram 2 of a structure of another communication system according to an embodiment of this application;
FIG. 5 is a diagram of a structure of a local multiplexer/demultiplexer according to an embodiment of this application;
FIG. 6 is a diagram 3 of a structure of another communication system according to an embodiment of this application;
FIG. 7 is a diagram 4 of a structure of another communication system according to an embodiment of this application;
FIG. 8 is a diagram of a detection electrical signal based on an OTDR according to an embodiment of this application;
FIG. 9 is a diagram 5 of a structure of another communication system according to an embodiment of this application;
FIG. 10 is a diagram 6 of a structure of another communication system according to an embodiment of this application;
FIG. 11 is a schematic flowchart 1 of a first detection method according to an embodiment of this application;
FIG. 12 is a schematic flowchart 2 of another first detection method according to an embodiment of this application;
FIG. 13 is a schematic flowchart of a second detection method according to an embodiment of this application; and
FIG. 14 is a schematic flowchart of a third detection method according to an embodiment of this application.

### DESCRIPTION OF EMBODIMENTS

It should be noted that terms such as "first" and "second" in embodiments of this application are merely used to distinguish between features of a same type, and cannot be understood as an indication of relative importance, a quantity, a sequence, or the like.

The term such as "example" or "for example" in embodiments of this application indicate giving an example, an illustration, or a description. Any embodiment or design scheme described as an "example" or "for example" in this application should not be explained as being more preferred or having more advantages than another embodiment or design scheme. Exactly, use of the terms such as "example" or "for example" is intended to present a related concept in a specific manner.

The terms such as "coupling" and "connection" in embodiments of this application should be understood in a broad sense. For example, the terms may mean a direct physical connection or an indirect connection implemented through an electronic component, for example, a connection implemented through a resistor, an inductor, a capacitor, or another electronic component.

An optical time-domain reflectometer (optical time-domain reflectometer, OTDR) is an optical-electrical integrated instrument that detects a backscattered echo optical signal generated by Rayleigh scattering and Fresnel reflection during optical signal transmission in an optical fiber. By detecting the echo optical signal, the optical time-domain reflectometer, the optical time-domain reflectometer can determine a location at which a transmission fault occurs on the optical fiber.

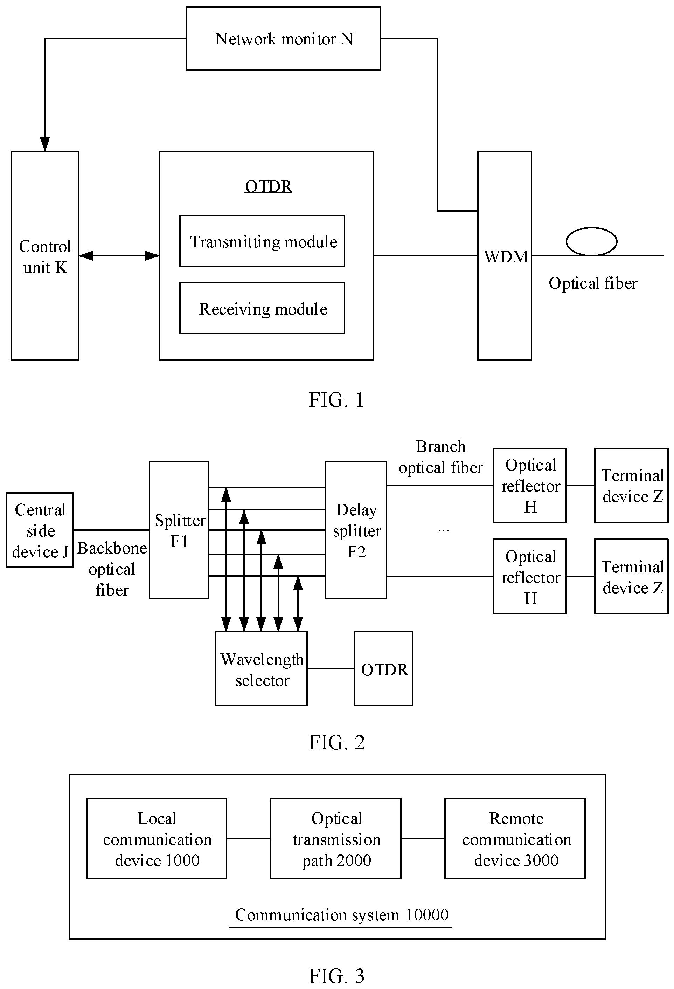

FIG. 1 shows a transmission fault detection manner of an OTDR. A network monitor N monitors a transmission status of an optical fiber by using a wavelength division multiplexer (wavelength division multiplexer, WDM). When detecting that a transmission fault occurs on the optical fiber, the network monitor N feeds back alarm information to a control unit K. After the control unit K receives the alarm information, the control unit K controls a transmitting module of the OTDR to transmit a detection optical signal through the WDM, and a receiving module of the OTDR receives an echo optical signal of the detection optical signal from the WDM. Through analysis of the echo optical signal, a location at which the transmission fault occurs on the optical fiber may be determined. However, this manner is applicable to detection on only a coupled backbone link of an optical transmission path. If there are a plurality of links in the optical transmission path, the OTDR cannot implement cross-link detection on another uncoupled link.

When the optical fiber for transmitting an optical signal includes a plurality of different links, a specific device needs to be added to assist in implementing multi-link detection. As shown in FIG. 2, a central side device J is coupled to a plurality of branch optical fibers through a backbone optical fiber and a splitter F1, and is coupled to a plurality of terminal devices Z through the plurality of branch optical fibers. When the OTDR needs to perform transmission fault detection on the plurality of different branch optical fibers, the OTDR may perform, based on a delay splitter F2 and optical reflectors H, detection on optical splitting links to which different optical network units (optical network units, ONUs) are connected. In this solution, the OTDR is coupled to the plurality of links. The delay splitter performs delay processing on optical signals on different optical splitting links, and the OTDR receives echo optical signals on the different optical splitting links respectively, to implement identification of the different optical splitting links. However, in this solution, the OTDR still needs to be coupled to different links. In addition, there is a need to configure an additional delay splitter F and a plurality of additional optical reflectors H. In this manner, a layout of a communication system is complex and costs are increased. In addition, this solution is applicable to neither a scenario in which there is no related hardware configuration nor a scenario in which a delay splitter F2 and optical reflectors H cannot be configured.

An embodiment of this application provides a communication system. As shown in FIG. 3, the communication system 10000 includes a local communication device 1000, an optical transmission path 2000, and a remote communication device 3000. The local communication device 1000 performs service communication interaction with the remote communication device 3000 through the optical transmission path 2000.

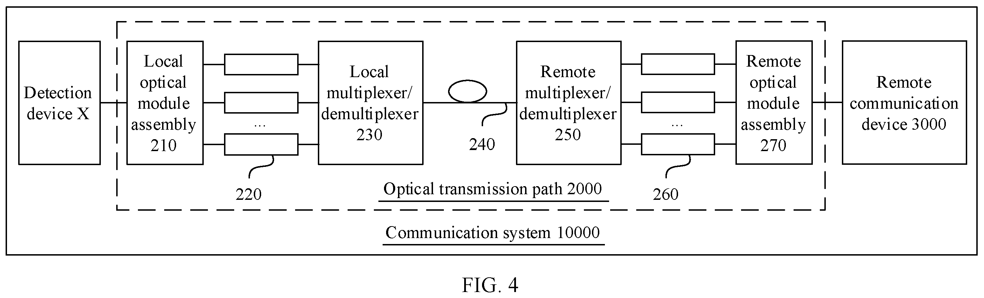

To perform transmission fault detection on the optical transmission path 2000 of the communication system 10000, as shown in FIG. 4, the communication system 10000 further includes a detection device X, and the detection device X detects a transmission fault on the optical transmission path 2000. The optical transmission path 2000 includes a local optical module assembly 210, a plurality of local wavelength division multiplexing optical link groups 220, a local multiplexer/demultiplexer 230, a main optical link 240, a remote multiplexer/demultiplexer 250, a plurality of remote wavelength division multiplexing optical link groups 260, and a remote optical module assembly 270 that are sequentially coupled. The detection device X is coupled to the local optical module assembly 210. The remote communication device 3000 is coupled to the remote optical module assembly 270. The plurality of local wavelength division multiplexing optical link groups 220 are coupled to a plurality of filtering ends of the local multiplexer/demultiplexer 230. A multiplexing end of the local multiplexer/demultiplexer 230 is coupled to the plurality of remote wavelength division multiplexing optical link groups 260. The local optical module assembly 210 integrates an OTDR detection function, and detection accuracy of the OTDR detection function is greater than filtering accuracy of the local multiplexer/demultiplexer. The detection device X is configured to:
in response to first alarm information, output different fault indication signals based on whether the local optical module assembly 210 detects a filtering leakage optical signal from the plurality of local wavelength division multiplexing optical link groups 220 based on the OTDR detection function, where the first alarm information indicates that a first local wavelength division multiplexing optical link group 221 in the plurality of local wavelength division multiplexing optical link groups 220 is incapable of exchanging a service optical signal, and the fault indication signal indicates that the transmission fault occurs on the first local wavelength division multiplexing optical link group 221 or the transmission fault occurs on a first remote wavelength division multiplexing optical link group 261 corresponding to the first local wavelength division multiplexing optical link group 221.

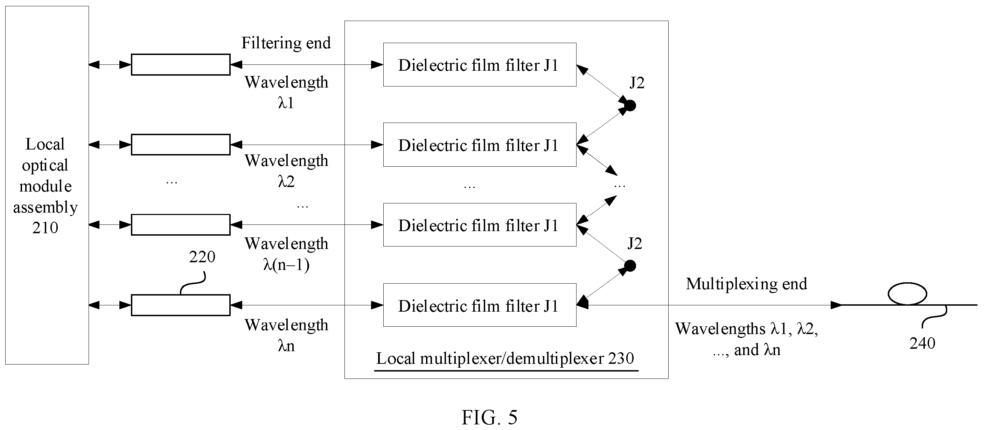

For example, FIG. 5 is a diagram of a structural principle of a multiplexer/demultiplexer. A plurality of dielectric film filters J1 and an optical fiber connector J2 are integrated within the multiplexer/demultiplexer. First ends of the plurality of dielectric film filters are used as filtering ends of the multiplexer/demultiplexer, and second ends of the plurality of dielectric film filters J1 are separately coupled to the optical fiber connector J2. The optical fiber connector J2 is configured to multiplex optical signals of different wavelengths received by the dielectric film filters. A first end of one of the plurality of dielectric film filters J1 is further coupled to the main optical link 240 as a multiplexing end of the multiplexer/demultiplexer, to exchange an optical signal with the main optical link 240. For example, the multiplexer/demultiplexer is the local multiplexer/demultiplexer 230. The plurality of local wavelength division multiplexing optical link groups 220 are coupled to the first ends of the plurality of dielectric film filters J1 (namely, the filtering ends). The first ends of the dielectric film filters J1 are configured to allow optical signals of corresponding wavelengths to pass through. A local wavelength division multiplexing optical link group 220 coupled to a first end of a dielectric film filter J1 transmits an optical signal of a corresponding wavelength. The second ends of the dielectric film filters J1 multiplex optical signals of different wavelengths through the optical fiber connector J2, and send a multiplexed optical signal to the main optical link 240 from the multiplexing end. Alternatively, the second ends of the dielectric film filters J1 receive optical signals of different wavelengths from the main optical link 240, and optical signals of different wavelengths are filtered out through first ends of different dielectric film filters J1 to corresponding local wavelength division multiplexing optical link groups 220. In this embodiment of this application, theoretically, a first end of each dielectric film filter J1 can output only an optical signal of a corresponding wavelength. However, all components have signal processing accuracy, and filters also have signal filtering accuracy. Therefore, the first end of the dielectric film filter J1 can allow only a signal with a specific signal strength or above to pass through, but still outputs an optical signal of another wavelength with a strength below the signal strength. Detection accuracy of OTDR detection is usually very high, and a signal on which the dielectric film filter J1 fails to perform filtering processing, namely, a filtering leakage optical signal, can be detected through OTDR detection. Detection of whether a transmission fault exists at any locations on the optical transmission path 2000 can be implemented by detecting whether a filtering leakage optical signal exists on the local multiplexer/demultiplexer 230.

In this embodiment of this application, the OTDR detection function is integrated into the local optical module assembly 210. By using the feature that the detection accuracy of the OTDR detection function is greater than the filtering accuracy of the local multiplexer/demultiplexer 230, whether the filtering leakage optical signal exists in the plurality of local wavelength division multiplexing optical link groups 220 coupled to the local multiplexer/demultiplexer 230 is detected. Each filtering leakage optical signal represents that a local wavelength division multiplexing optical link group 220 or a remote wavelength division multiplexing optical link group 260 can normally send an optical signal or normally receive an optical signal. Transmission fault detection can be performed on all links on the optical transmission path 2000 through detection on the filtering leakage optical signal. By using this solution, full-range detection on the optical transmission path 2000 can be implemented without adding an additional component. Compared with a conventional technology, this solution does not increase component costs of the communication system 10000, expands a range of transmission fault detection and improves accuracy of the transmission fault detection, and is further applicable to the communication system 10000 in more application scenarios.

In some possible implementations, an uplink optical signal and a downlink optical signal are transmitted through different links. Each wavelength division multiplexing optical link group includes an uplink and a downlink. In this case, locations at which the transmission fault occurs on the optical transmission path 2000 may be as follows: a location 1: the transmission fault occurs on the main optical link 240; a location 2: the transmission fault occurs on an uplink of the local wavelength division multiplexing optical link group 220; a location 3: the transmission fault occurs on a downlink of the local wavelength division multiplexing optical link group 220; a location 4: the transmission fault occurs on an uplink of the remote wavelength division multiplexing optical link group 260; and a location 5: the transmission fault occurs on a downlink of the remote wavelength division multiplexing optical link group 260. When the transmission fault occurs on the optical transmission path 2000, both the detection device X at a local end and the remote communication device 3000 at a remote end can receive corresponding alarm information. Different alarm information indicates that different links is incapable of exchanging the service optical signal. Based on different alarm information, a fault indication signal may be output in different manners, to indicate that the transmission fault exists at a corresponding location. When the plurality of local wavelength division multiplexing optical link groups 220 are not faulty at the same time, the remote communication device 3000 receives remote alarm information. The remote alarm information indicates that the first remote wavelength division multiplexing optical link group 261 in the plurality of remote wavelength division multiplexing optical link groups 260 is incapable of exchanging the service optical signal with the corresponding first local wavelength division multiplexing optical link group 221.

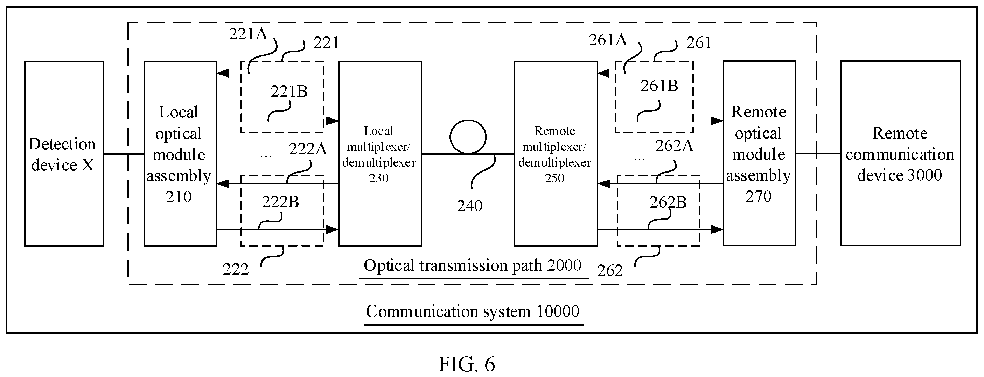

Within a first time after receiving the remote alarm information, the remote communication device 3000 is configured to: in response to the remote alarm information, control, within the first time, a first optical module assembly to send a first optical signal to an uplink of a first optical splitting link group in a plurality of first wavelength division multiplexing optical link groups, where the alarm information indicates that the optical splitting link group is incapable of exchanging the service optical signal. For example, as shown in FIG. 6, the first optical module assembly is the remote optical module assembly 270, and the plurality of first wavelength division multiplexing optical link groups are the plurality of remote wavelength division multiplexing optical link groups 260. The foregoing first optical splitting link group is the first remote wavelength division multiplexing optical link group 261 that is in a plurality of wavelength division multiplexing optical link groups and that is incapable of exchanging the service optical signal. In this embodiment of this application, when the first remote wavelength division multiplexing optical link group 261 in the plurality of remote wavelength division multiplexing optical link groups 260 is incapable of exchanging the service optical signal, within the first time after receiving the remote alarm information, the remote communication device 3000 controls the remote optical module assembly 270 to send the first optical signal to a first remote uplink 261A of the first remote wavelength division multiplexing optical link group 261. The first optical signal assists the detection device X in detecting a location of the transmission fault. Based on the first optical signal, the detection device X may output, in response to the first alarm information, different fault indication signals based on whether the local optical module assembly 210 detects the filtering leakage optical signal from the plurality of local wavelength division multiplexing optical link groups 220 based on the OTDR detection function. Specifically, the following fault indication signals may be included.

In some examples, the detection device X may output a first fault indication signal to indicate that the transmission fault occurs on the first remote uplink 261A. As shown in FIG. 6, when within the first time, a first electrical signal is not received from the local optical module assembly 210 and a first leakage electrical signal is received, the first fault indication signal is output, where the first fault indication signal indicates that the transmission fault occurs on a first local uplink 221A. The first electrical signal indicates that the first optical signal is input to the local optical module assembly 210 from the first remote uplink 261A and the first local uplink 221A within the first time. The first leakage electrical signal indicates that the local optical module assembly 210 detects a filtering leakage optical signal of the first optical signal from any one of local downlinks based on the OTDR detection function within the first time.

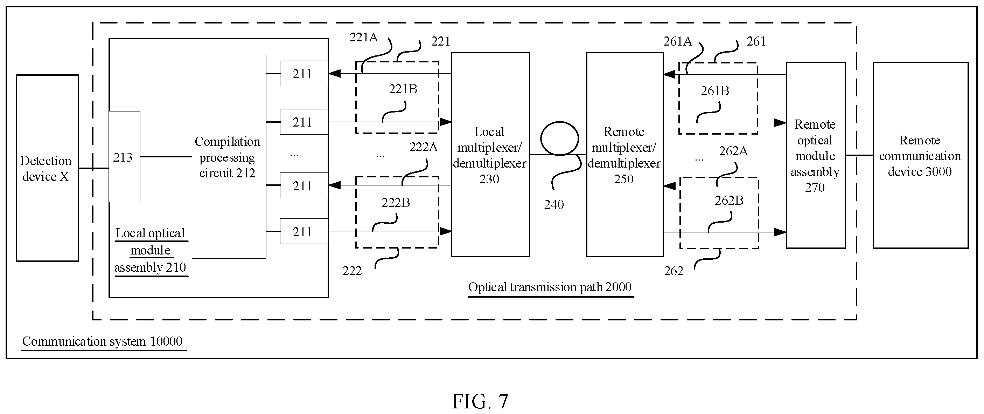

In this embodiment of this application, as shown in FIG. 7, a plurality of optical-to-electrical conversion circuits 211, a compilation processing circuit 212, and an electrical signal exchange interface 213 are disposed in the local optical module assembly 210. The detection device X is coupled to the local optical module assembly 210 through the electrical signal exchange interface 213, to exchange the service electrical signal. The electrical signal exchange interface 213 is coupled to the plurality of optical-to-electrical conversion circuits 211 through the compilation processing circuit 212, and is correspondingly coupled to uplinks and the downlinks of the plurality of local wavelength division multiplexing optical link groups 220 respectively through the plurality of optical-to-electrical conversion circuits 211. Because the first local wavelength division multiplexing optical link group 221 and the first remote wavelength division multiplexing optical link group 261 are incapable of exchanging the service optical signal, and not all wavelength division multiplexing optical link groups are incapable of exchanging the service optical signal, it may be determined that the main optical link 240 has no transmission fault. Within the first time after receiving the remote alarm information, the remote communication device 3000 controls the remote optical module assembly 270 to send the first optical signal to the first remote uplink 261A. If no transmission fault occurs on the first remote uplink 261A, the first optical signal may be transmitted from the first remote uplink 261A to the main optical link 240, and transmitted from the main optical link 240 to the local multiplexer/demultiplexer 230. If no transmission fault occurs on the first local uplink 221A at the local end, the local optical module assembly 210 may receive the first optical signal from the first local uplink 221A, convert the first optical signal into an electrical signal through optical-to-electrical conversion by using a corresponding optical-to-electrical conversion circuit 211, and output the first electrical signal from the electrical signal exchange interface 213 after compilation processing by the compilation processing circuit 212. Therefore, if the first electrical signal is not received within the first time, it is proved that the transmission fault exists between the first local uplink 221A and the first remote uplink 261A. In this case, if the first optical signal is transmitted to the local multiplexer/demultiplexer 230, the filtering leakage optical signal of the first optical signal may be detected, based on the OTDR detection function integrated into any one of the local downlinks of the local optical module assembly 210, on the local downlink integrated with the OTDR detection function. The local optical module assembly 210 may output a first filtering electrical signal based on the filtering leakage optical signal of the first optical signal. In this case, it is proved that, in conclusion, if within the first time, the detection device X does not receive the first electrical signal from the local optical module assembly 210 and receives the first leakage electrical signal, the detection device X may output the first fault indication signal, to indicate, by the first fault indication signal, that the transmission fault occurs on the first local uplink 221A.

In some examples, the detection device X may output a second fault indication signal to indicate that the transmission fault occurs on the first remote uplink 261A. As shown in FIG. 6 and FIG. 7, when a first electrical signal and a first leakage electrical signal are not received from the local optical module assembly 210 within the first time, the second fault indication signal is output. In this embodiment of this application, when neither the first electrical signal nor the first leakage electrical signal is received, it may be determined that the first optical signal is not transmitted to the local multiplexer/demultiplexer 230. In this case, the detection device X may output the second fault indication signal to indicate that the transmission fault occurs on the first remote uplink 261A.

In some examples, when the OTDR detection function of the local optical module assembly 210 is not integrated into a first local downlink 221B of the first local wavelength division multiplexing optical link 221, but is integrated into a second local downlink 222B of a second local wavelength division multiplexing optical link group 222, the detection device X may output a third fault indication signal to indicate that the transmission fault occurs on a first remote downlink 261B. As shown in FIG. 6 and FIG. 7, the detection device X is further configured to control, within a second time after the first time, the local optical module assembly 210 to output a first detection optical signal to the first local downlink 221B. When a first electrical signal is received from the local optical module assembly 210 within the first time and a second leakage electrical signal is received from the local optical module assembly 210 within the second time, the third fault indication signal is output. The first electrical signal indicates that the first optical signal is input to the local optical module assembly 210 from the first remote uplink 261A and a first local uplink 221A within the first time. The second leakage electrical signal indicates that the local optical module assembly 210 detects a filtering leakage optical signal of the first detection optical signal from the second local downlink 222B based on the OTDR detection function within the second time. In this embodiment of this application, when the first electrical signal is received within the first time, it is proved that no transmission fault exists between the first local uplink 221A and the first remote uplink 261A, and a transmission fault of the first local wavelength division multiplexing optical link group 221 and the first remote wavelength division multiplexing optical link group 261 occurs between the first local downlink 221B and the first remote downlink 261B. In this case, within the second time after the first time, the detection device X may control the local optical module assembly 210 to send the first detection optical signal to the first local downlink 221B. Because the OTDR detection function is integrated into the second local downlink 222B of the second local wavelength division multiplexing optical link group 222, whether the filtering leakage optical signal of the first detection optical signal exists on the second local downlink 222B may be detected by using the OTDR detection function. If the filtering leakage optical signal of the first detection optical signal exists on the second local downlink 222B, it is proved that the first local downlink 221B can normally transmit the first detection optical signal, and the local optical module assembly 210 may output the second leakage electrical signal to the detection device X based on the filtering leakage optical signal of the first detection optical signal. The detection device X outputs, based on the second leakage electrical signal, the third fault indication signal to indicate that the transmission fault occurs on the first remote downlink 261B.

In some examples, when the OTDR detection function of the local optical module assembly 210 is not integrated into a first local downlink 221B of the first local wavelength division multiplexing optical link 221, but is integrated into a second local downlink 222B of a second local wavelength division multiplexing optical link group 222, the detection device X may output a fourth fault indication signal to indicate that the transmission fault occurs on the first local downlink 221B. As shown in FIG. 6 and FIG. 7, when a first electrical signal is received from the local optical module assembly 210 within the first time and a second leakage electrical signal is not received from the local optical module assembly 210 within a second time, the fourth fault indication signal is output, where the fourth fault indication signal indicates that the transmission fault occurs on the first local downlink 221B. In this embodiment of this application, when the first electrical signal is received within the first time, it is proved that no transmission fault exists between a first local uplink 221A and the first remote uplink 261A. In addition, when the second leakage electrical signal is not received within the second time, it is proved that the transmission fault occurs on the first local downlink 221B.

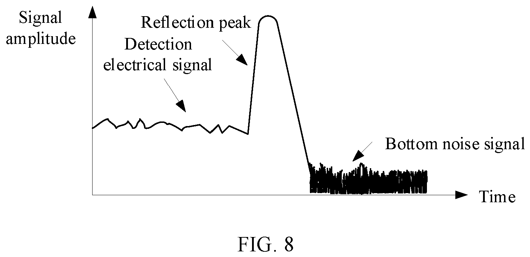

In some examples, when the local optical module assembly 210 integrates the OTDR detection function into a first local downlink 221B, the detection device X may output a fifth fault indication signal to indicate a location at which the transmission fault occurs on a first remote downlink 261B, or indicate a location at which the transmission fault occurs on the first local downlink 221B. As shown in FIG. 6 and FIG. 7, the detection device X is configured to: when a first electrical signal is received from the local optical module assembly 210 within the first time, control the local optical module assembly 210 to send a second detection optical signal to the first local downlink 221B within a second time after the first time, where the first electrical signal indicates that the first optical signal is input to the local optical module assembly 210 from the first remote uplink 261A and a first local uplink 221A within the first time; input a first detection electrical signal from the local optical module assembly 210, where the first detection electrical signal is an electrical signal obtained by the local optical module assembly 210 based on the OTDR detection function and a first echo optical signal, and the first echo optical signal is an echo optical signal of the second detection optical signal; and output the fifth fault indication signal based on the first detection electrical signal, where the fifth fault indication signal indicates the location at which the transmission fault occurs on the first remote downlink 261B, or indicates the location at which the transmission fault occurs on the first local downlink 221B. In this embodiment of this application, when the first electrical signal is received from the local optical module assembly 210 within the first time, it is proved that no transmission fault exists between the first local uplink 221A and the first remote uplink 261A, and a transmission fault of the first local wavelength division multiplexing optical link group 221 and the first remote wavelength division multiplexing optical link group 261 occurs between the first local downlink 221B and the first remote downlink 261B. Because when the local optical module assembly 210 integrates the OTDR detection function into the first local downlink 221B, the second detection optical signal may be directly sent to the first local downlink 221B through the local optical module assembly 210. The second detection optical signal is transmitted to the first remote downlink 261B through the main optical link 240. FIG. 8 is a diagram of a detection electrical signal obtained based on the OTDR detection function and an echo optical signal. Fresnel reflection is generated at a location at which a transmission fault occurs on an optical link, and a strong reflection peak is formed. The location at which the transmission fault occurs on the optical link may be determined based on a location of the reflection peak in the detection electrical signal. The echo optical signal of the second detection optical signal may be detected based on the OTDR detection function, and a location at which the transmission fault occurs on the first remote downlink 261B, the main optical link 240, or the first local downlink 221B is directly determined based on a detection result.

In conclusion, in embodiments shown in FIG. 6 and FIG. 7, an uplink optical signal and a downlink optical signal are transmitted through different links. Each wavelength division multiplexing optical link group includes an uplink and a downlink. Fault locating of an uplink and a downlink of the local wavelength division multiplexing optical link group and an uplink and a downlink of the remote wavelength division multiplexing optical link group may be implemented through implementations of the foregoing embodiments.

In some possible implementations, an uplink optical signal and a downlink optical signal are transmitted through a same link. Each wavelength division multiplexing optical link group includes an uplink/downlink multiplexing link, and the uplink optical signal and the downlink optical signal are transmitted through the uplink/downlink multiplexing link. In this case, transmission faults on different links may also be detected through a filtering leakage optical signal.

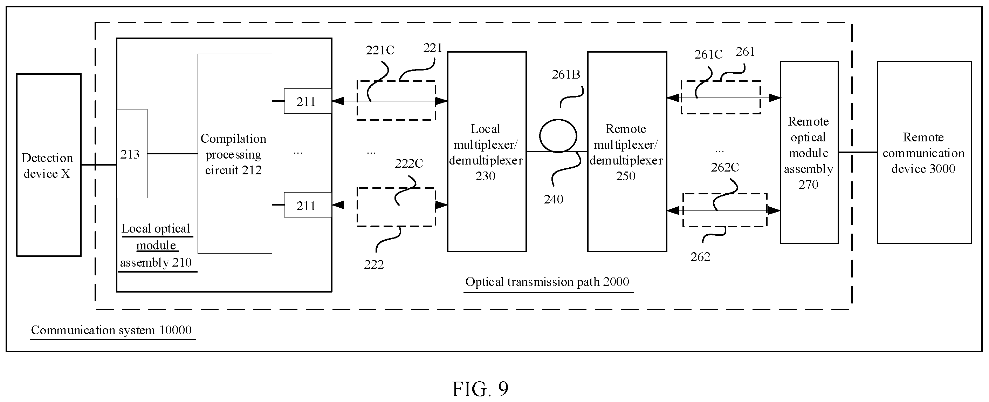

In some examples, when the local optical module assembly 210 integrates the OTDR detection function into the first local wavelength division multiplexing optical link group 221, as shown in FIG. 9, a detection optical signal may be directly sent to a first local uplink/downlink multiplexing link 221C of the first local wavelength division multiplexing optical link group 221 based on the OTDR detection function, and a location of the transmission fault on the first local uplink/downlink multiplexing link 221C, the main optical link 240, or a first remote uplink/downlink multiplexing link 261C is determined based on an echo optical signal of the detection optical signal.

In some examples, when the local optical module assembly 210 integrates the OTDR detection function into a second uplink/downlink multiplexing link 222C of a second local wavelength division multiplexing optical link group 222, the detection device X may output a sixth fault indication signal to indicate that the transmission fault occurs on a first remote uplink/downlink multiplexing link 261C. As shown in FIG. 9, the detection device X is configured to: in response to the first alarm information, control the local optical module assembly 210 to send a third detection optical signal to the first local uplink/downlink multiplexing link 221C; and output the sixth fault indication signal when a third leakage electrical signal is received from the local optical module assembly 210, where the sixth fault indication signal indicates that the transmission fault occurs on the first remote uplink/downlink multiplexing link 261C, and the third leakage electrical signal indicates that the local optical module assembly 210 detects a filtering leakage optical signal of the third detection optical signal from the second local uplink/downlink multiplexing link 222C based on the OTDR detection function. In this embodiment of this application, when the first local uplink/downlink multiplexing link 221C and the first remote uplink/downlink multiplexing link 261C are incapable of exchanging the service optical signal, in response to the first alarm information, the detection device X may control the local optical module assembly 210 to send the third detection optical signal to the first local uplink/downlink multiplexing link 221C. If the filtering leakage optical signal of the third detection optical signal is detected from another local uplink/downlink multiplexing link integrated with the OTDR detection function (for example, the second local uplink/downlink multiplexing link 222C), it is proved that the first local uplink/downlink multiplexing link 221C can normally transmit the third detection optical signal, and the transmission fault occurs on the first remote uplink/downlink multiplexing link 261C.

In some examples, when the local optical module assembly 210 integrates the OTDR detection function into a second uplink/downlink multiplexing link 222C of a second local wavelength division multiplexing optical link group 222, the detection device X may output a seventh fault indication signal to indicate that the transmission fault occurs on a first local uplink/downlink multiplexing link 221C. As shown in FIG. 9, the detection device X is configured to output the seventh fault indication signal when a third leakage electrical signal is not received from the local optical module assembly 210, where the seventh fault indication signal indicates that the transmission fault occurs on the first local uplink/downlink multiplexing link 221C. In this embodiment of this application, when the third leakage electrical signal is not received, it indicates that a third detection optical signal is not normally transmitted on the first local uplink/downlink multiplexing link 221C, and the transmission fault occurs on the first local uplink/downlink multiplexing link 221C.

In some possible implementations, in embodiments shown in FIG. 6, FIG. 7, and FIG. 9, the detection device X may output an eighth fault indication signal to indicate a location at which the transmission fault occurs on the main optical link 240. For example, as shown in FIG. 6, FIG. 7, and FIG. 9, the detection device X is further configured to: in response to second alarm information, control the local optical module assembly 210 to send a fourth detection optical signal to any one of the local downlinks, where the second alarm information indicates that none of the plurality of local wavelength division multiplexing optical link groups 220 and the plurality of remote wavelength division multiplexing optical link groups 260 are capable of exchanging the service optical signal; input a second detection electrical signal from the local optical module assembly 210, where the second detection electrical signal is an electrical signal obtained by the local optical module assembly 210 based on the OTDR detection function and a second echo optical signal, and the second echo optical signal is an echo optical signal of the fourth detection optical signal; and output the eighth fault indication signal based on the second detection electrical signal, where the eighth fault indication signal indicates the location at which the transmission fault occurs on the main optical link 240. In this embodiment of this application, when alarm information received by the detection device X is the second alarm information instead of the first alarm information, it indicates that none of the local wavelength division multiplexing optical link groups 220 and the remote wavelength division multiplexing optical link groups 260 are capable of exchanging the service optical signal. Generally, a probability that transmission faults occurs on all of the local wavelength division multiplexing optical link groups 220 and the remote wavelength division multiplexing optical link groups 260 at the same time is very low. In this case, it may be determined, based on the second alarm information, that the transmission fault occurs on the main optical link 240, the echo optical signal of the fourth detection optical signal may be detected by using the OTDR detection function integrated into the local optical module assembly 210, to directly determine the specific location at which the transmission fault occurs on the main optical link.

In some possible implementations, when the first alarm information occurs, all service optical signal exchange may be suspended, to improve detection accuracy of a filtering leakage optical signal.

In some examples, the detection device X shown in FIG. 4, FIG. 6, FIG. 7, and FIG. 9 is the local communication device 1000. In this case, the local communication device 1000 (or referred to as the detection device X) is further configured to: in response to the first alarm information, stop exchanging the service optical signal.

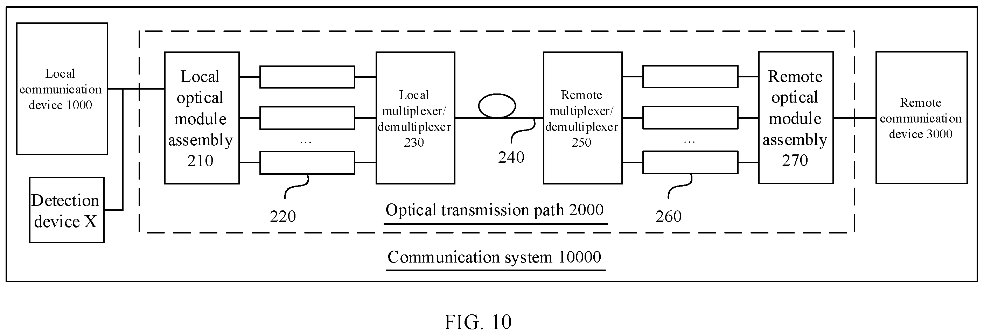

In some examples, as shown in FIG. 10, the detection device X may be an optical monitoring device that is disposed in the communication system 10000 and that is configured to detect and manage an optical signal transmission status. In this case, the detection device X may output a first control signal to the local communication device 1000, where the first control signal is used to control the communication device to stop exchanging the service optical signal.

In some possible implementations, the local optical module assembly 210 may be an optical module, and the optical module integrates an optical-to-electrical conversion circuit 211 and the like for each local wavelength division multiplexing optical link group 220.

In some possible implementations, the local optical module assembly 210 may include a plurality of optical modules, and the plurality of optical modules are correspondingly coupled to the plurality of local wavelength division multiplexing optical link groups 220 respectively.

In some implementations, the communication system 10000 may be an optical communication system. In this case, the local communication device 1000 and the remote communication device 3000 are optical communication devices.

In some implementations, the communication system 10000 may be a wireless communication system, for example, a wireless communication base station. In this case, the local communication device 1000 and the remote communication device 3000 are wireless communication devices. For example, the communication system 10000 may be fronthaul networking in wireless communication. In some examples, the local communication device 1000 may be a baseband processing unit (building baseband unit, BBU) in the fronthaul networking. The remote communication device 3000 may be a remote radio unit (remote radio unit, RRU) or an active antenna unit (active antenna unit, AAU) in the fronthaul networking. In some examples, the local communication device 1000 may be an RRU or an AAU in the fronthaul networking, and the remote communication device 3000 may be a BBU in the fronthaul networking. In this embodiment of this application, CRAN networking in wireless communication is used as an example. In the CRAN networking, a quantity of faults on an optical transmission path of a communication system including fronthaul networking accounts for about 30% of a total quantity of faults on the CRAN networking. The fronthaul networking involves many components such as an RRU, a BBU, an optical module assembly, an optical fiber, and a multiplexer/demultiplexer, and a laying path of each optical link ranges from 1 km to 10 km. Components such as a delay splitter F2 and an optical reflector H are not disposed in a fronthaul network. In comparison with an optical communication system, in a fronthaul network of the wireless communication system, it is more difficult to locate the transmission fault on the optical transmission path 2000. By using the method recorded in the foregoing embodiments, the transmission fault on the optical transmission path in the wireless communication system can be located comprehensively, quickly, and accurately.

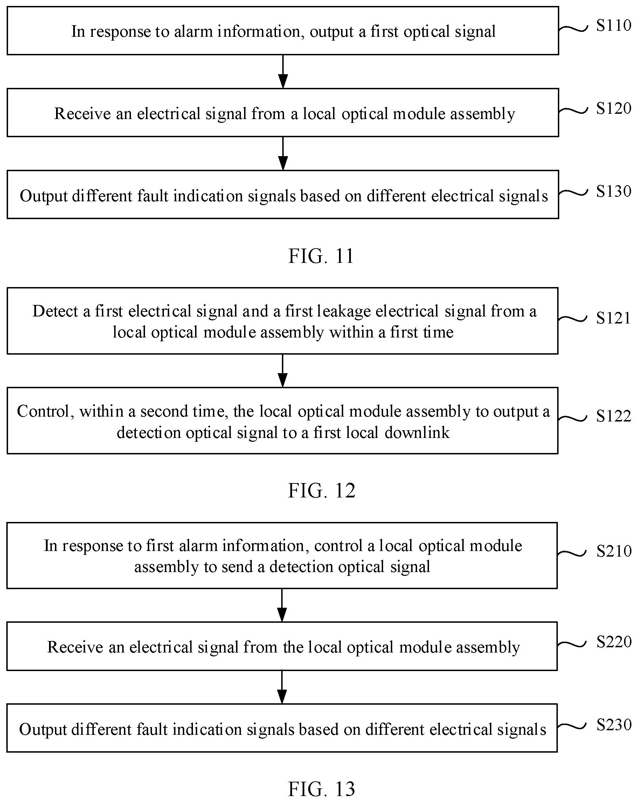

Based on the communication system 10000 of the structure shown in FIG. 4, FIG. 5, FIG. 6, FIG. 7, or FIG. 10, each wavelength division multiplexing optical link group includes an uplink and a downlink, and the following first detection method that includes step S110 to step S130 shown in FIG. 11 may be performed.

The first detection method is applied to a remote communication device 3000, and specifically includes the following steps.

S110: In response to alarm information, output a first optical signal.

In some possible implementations, the communication device exchanges a service optical signal with another communication device. After alarm information indicating that an optical splitting link group is incapable of exchanging the service optical signal is received, a first optical module assembly is controlled, within a first time, to send the first optical signal to a first uplink of a first optical splitting link group in at least one first wavelength division multiplexing optical link group, where the alarm information indicates that the optical splitting link group is incapable of exchanging the service optical signal.

For example, as shown in FIG. 6 and FIG. 7, in response to remote alarm information, the remote communication device 3000 controls, within the first time, the remote optical module assembly 270 to send the first optical signal to the first remote uplink 261A of the first remote wavelength division multiplexing optical link group 261 that is incapable of exchanging the service optical signal.

In some possible implementations, the remote communication device 3000 is further configured to: in response to the alarm information, stop exchanging the service optical signal.

A second detection method is applied to a detection device X, and specifically includes the following steps.

S120: Receive an electrical signal from a local optical module assembly 210.

In this embodiment of this application, first alarm information indicates that a first local wavelength division multiplexing optical link group 221 in a plurality of local wavelength division multiplexing optical link groups 220 is incapable of exchanging the service optical signal with the first remote wavelength division multiplexing optical link group 261 in a plurality of remote wavelength division multiplexing optical link groups 260. In this embodiment of this application, there may be one piece of first alarm information or a plurality of pieces of first alarm information, and the plurality of pieces of first alarm information indicates that different local wavelength division multiplexing optical link groups 220 are incapable of exchanging the service optical signal with corresponding remote wavelength division multiplexing optical link groups 260. When none of the local wavelength division multiplexing optical link groups 220 are capable of exchanging the service optical signal with corresponding remote wavelength division multiplexing optical link groups 260, alarm information received by the detection device X is second alarm information. When the first alarm information is received, it indicates that a part of all the local wavelength division multiplexing optical link groups 220 are incapable of exchanging the service optical signal. In this case, a main optical link 240 has no transmission fault. A transmission fault occurs on the first local wavelength division multiplexing optical link group 221 that is incapable of exchanging the service optical signal or the corresponding first remote wavelength division multiplexing optical link group 261 that is incapable of exchanging the service optical signal.

In some possible implementations, S120 may include the following sub-operations of step S121 and step S122 shown in FIG. 12.

S121: Detect a first electrical signal and a first leakage electrical signal from the local optical module assembly 210 within the first time.

For example, as shown in FIG. 6 and FIG. 7, if the transmission fault exists on the first remote uplink 261A or the first local uplink 221A, the first electrical signal cannot be output from the local optical module assembly 210 within the first time. In this case, based on an OTDR detection function of the local optical module assembly 210, if the first leakage electrical signal (an electrical signal obtained based on a filtering leakage optical signal of the first optical signal) may be output from the local optical module assembly 210, it is proved that the first optical signal is transmitted to the local optical module assembly 210, the first remote uplink 261A operates normally, and the transmission fault occurs on the first local uplink 221A. If the first electrical signal and the first leakage electrical signal cannot be output from the local optical module assembly 210, it is proved that the transmission fault occurs on the first local uplink 221A.

For example, as shown in FIG. 6 and FIG. 7, when the remote communication device 3000 controls the remote optical module assembly 270 to send the first optical signal to the first remote uplink 261A, if the first electrical signal obtained based on the first optical signal may be output from the local optical module assembly 210 within the first time, it is proved that neither the first remote uplink 261A nor the first local uplink 221A has the transmission fault. In this case, the detection device X needs to perform the operation of step S122, to determine that the transmission fault occurs on the first remote downlink 261B or the first local downlink 221B.

S122: Control, within a second time, the local optical module assembly 210 to output a detection optical signal to the first local downlink 221B.

For example, as shown in FIG. 6 and FIG. 7, when the local optical module assembly 210 does not integrate the OTDR detection function into the first local downlink 221B, and integrates the OTDR detection function into the second local downlink 222B in the second local wavelength division multiplexing optical link group 222, in response to the first alarm information, the detection device X may control, within the second time after the first time, the local optical module assembly 210 to output a first detection optical signal to the first local downlink 221B. If a filtering leakage optical signal of the first detection optical signal may be detected from the second local downlink 222B based on the OTDR detection function of the local optical module assembly 210, a second leakage electrical signal may be obtained. It may be determined, based on the second leakage electrical signal, that the first local downlink 221B can perform normal transmission.

For example, as shown in FIG. 6 and FIG. 7, when the local optical module assembly 210 does not integrate the OTDR detection function into the first local downlink 221B, and integrates the OTDR detection function into the second local downlink 222B in the second local wavelength division multiplexing optical link group 222, if a filtering leakage optical signal of a first detection optical signal is not detected from the second local downlink 222B of the second local wavelength division multiplexing optical link group 222 within the second time, it may be determined that the transmission fault occurs on the first local downlink 221B.

For example, as shown in FIG. 6 and FIG. 7, when the local optical module assembly 210 integrates the OTDR detection function into the first local downlink 221B, a specific location at which the transmission fault occurs on the first remote downlink 261B, the main optical link 240, and the first local downlink 221B may be directly detected and determined based on the OTDR detection function. In this case, in response to the first alarm information, when the first electrical signal is received from the local optical module assembly 210 within the first time, the local optical module assembly 210 is controlled, within the second time after the first time, to send a second detection optical signal to the first local downlink 221B. A first echo optical signal is obtained based on the second detection optical signal, OTDR detection is performed on a first detection electrical signal corresponding to the first echo optical signal, and the location of the transmission fault is determined based on a location of a reflection peak detected by an OTDR.

S130: Output different fault indication signals based on different electrical signals.

For example, when within the first time, the first electrical signal is not received from the local optical module assembly 210 and the first leakage electrical signal is received, a first fault indication signal is obtained, where the first fault indication signal indicates that the transmission fault occurs on the first local uplink 221A.

For example, when the first electrical signal and the first leakage electrical signal are not received from the local optical module assembly 210 within the first time, a second fault indication signal is obtained, where the second fault indication signal indicates that the transmission fault occurs on the first remote uplink 261A.

For example, when the first electrical signal is received from the local optical module assembly 210 within the first time and the second leakage electrical signal is received from the local optical module assembly 210 within the second time, a third fault indication signal is obtained, where the third fault indication signal indicates that the transmission fault occurs on the first remote downlink 261B.

For example, when the first electrical signal is received from the local optical module assembly 210 within the first time and the second leakage electrical signal is not received from the local optical module assembly 210 within the second time, a fourth fault indication signal is obtained, where the fourth fault indication signal indicates that the transmission fault occurs on the first local downlink 221B.

For example, when the first electrical signal is received from the local optical module assembly 210 within the first time and the first detection electrical signal is received within the second time, a fifth fault indication signal is output based on the first detection electrical signal, where the fifth fault indication signal indicates a location at which the transmission fault occurs on the first remote downlink 261B, or indicates a location at which the transmission fault occurs on the first local downlink 221B.

In this embodiment of this application, when an uplink optical signal and a downlink optical signal are transmitted through different links, each wavelength division multiplexing optical link group includes an uplink and a downlink. The first optical signal may be sent through the remote communication device 3000. In addition, the detection optical signal may be sent at the local detection device X. Transmission faults at different locations are determined based on reception statuses of the first optical signal and the detection optical signal by the local optical module assembly 210, and different fault indication signals are output based on determining results to indicate the corresponding locations at which the transmission faults occur.

Based on the communication system 10000 of the structure shown in FIG. 4, FIG. 5, FIG. 9, or FIG. 10, an uplink optical signal and a downlink optical signal are transmitted through a same link. Each wavelength division multiplexing optical link group includes an uplink/downlink multiplexing link, and the uplink optical signal and the downlink optical signal are transmitted through the uplink/downlink multiplexing link. The following second detection method including step S210 to step S230 shown in FIG. 13 may be performed.

S210: In response to first alarm information, control a local optical module assembly 210 to send a detection optical signal.

For example, the local optical module assembly 210 may be controlled to send the detection optical signal to a first local uplink/downlink multiplexing link 221C.

S220: Receive an electrical signal from the local optical module assembly 210.

For example, when the local optical module assembly 210 does not integrate an OTDR detection function into the first local uplink/downlink multiplexing link 221C of a first local wavelength division multiplexing optical link group 221, and integrates the OTDR detection function into a second local uplink/downlink multiplexing link 222C of a second local wavelength division multiplexing optical link group 222, a detection device X may control the local optical module assembly 210 to send a third detection optical signal to the first local uplink/downlink multiplexing link 221C. When the first local uplink/downlink multiplexing link 221C operates normally, a local multiplexer/demultiplexer 230 may receive the third detection optical signal. In this case, the local optical module assembly 210 may detect a filtering leakage optical signal of the third detection optical signal from the second local uplink/downlink multiplexing link 222C, and obtain a third leakage electrical signal based on the filtering leakage optical signal of the third detection optical signal. Therefore, when the local optical module assembly 210 outputs the third leakage electrical signal, it indicates that the first local uplink/downlink multiplexing link 221C can operate normally, and a transmission fault occurs on a first remote uplink/downlink multiplexing link 261C.

For example, when the local optical module assembly 210 does not integrate an OTDR detection function into the first local uplink/downlink multiplexing link 221C of a first local wavelength division multiplexing optical link group 221, and integrates the OTDR detection function into a second local uplink/downlink multiplexing link 222C of a second local wavelength division multiplexing optical link group 222, a detection device X may control the local optical module assembly 210 to send a third detection optical signal to the first local uplink/downlink multiplexing link 221C. If the detection device X fails to receive a third leakage electrical signal from the local optical module assembly 210, it is proved that a transmission fault occurs on the first local uplink/downlink multiplexing link 221C.

For example, when the local optical module assembly 210 integrates an OTDR detection function into the first local uplink/downlink multiplexing link 221C in a first local wavelength division multiplexing optical link group 221, a location at which a transmission fault occurs may be determined through directly detecting based on the OTDR detection function.

S230: Output different fault indication signals based on different electrical signals.

For example, when the local optical module assembly 210 does not integrate the OTDR detection function into the first local uplink/downlink multiplexing link 221C of the first local wavelength division multiplexing optical link group 221, and integrates the OTDR detection function into the second local uplink/downlink multiplexing link 222C of the second local wavelength division multiplexing optical link group 222, a sixth fault indication signal is output when the third leakage electrical signal is received from the local optical module assembly 210, where the sixth fault indication signal indicates that the transmission fault occurs on the first remote uplink/downlink multiplexing link 261C.

For example, when the local optical module assembly 210 does not integrate the OTDR detection function into the first local uplink/downlink multiplexing link 221C of the first local wavelength division multiplexing optical link group 221, and integrates the OTDR detection function into the second local uplink/downlink multiplexing link 222C of the second local wavelength division multiplexing optical link group 222, a seventh fault indication signal is output when the third leakage electrical signal is not received from the local optical module assembly 210, where the seventh fault indication signal indicates that the transmission fault occurs on the first local uplink/downlink multiplexing link 221C.

For example, when the local optical module assembly 210 integrates the OTDR detection function into the first local uplink/downlink multiplexing link 221C in the first local wavelength division multiplexing optical link group 221, a ninth fault indication signal is output based on the OTDR detection function. The ninth fault indication signal directly indicates a location at which the transmission fault occurs on the first local uplink/downlink multiplexing link 221C, or indicates a location at which the transmission fault occurs on the first remote uplink/downlink multiplexing link 261C. For descriptions of related technical principles and technical effects of the ninth fault indication signal, refer to the related descriptions of the fifth fault indication signal. Details are not described herein again.

In some possible implementations, detection methods recorded in FIG. 11, FIG. 12, and FIG. 13 may further include the following operation: stopping exchanging a service optical signal through an optical transmission path 2000. In some examples, the detection device X shown in FIG. 4, FIG. 6, FIG. 7, and FIG. 9 is a local communication device 1000. In this case, the local communication device 1000 (or referred to as the detection device X) is further configured to: in response to the first alarm information, stop exchanging the service optical signal. In some examples, as shown in FIG. 10, the detection device X may be an optical monitoring device that is disposed in the communication system 10000 and that is configured to detect and manage an optical signal transmission status. In this case, the detection device X may output a first control signal to the local communication device 1000, where the first control signal is used to control the communication device to stop exchanging the service optical signal. In this embodiment of this application, all local wavelength division multiplexing optical link groups 220 are stopped from exchanging the service signal, so that detection accuracy of a filtering leakage optical signal can be improved.

In some possible implementations, when a plurality of first local wavelength division multiplexing optical link groups 221 that are incapable of exchanging the service optical signal exist in the plurality of local wavelength division multiplexing optical link groups 220 at the same time (not all the local wavelength division multiplexing optical link groups 220 are incapable of exchanging the service optical signal), the first detection method or the second detection method may be used to detect and locate the transmission fault for each first local wavelength division multiplexing optical link group 221.

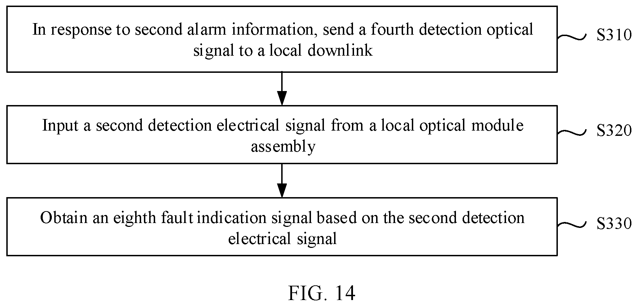

Based on the communication system 10000 of the structure shown in FIG. 4, FIG. 6, FIG. 7, FIG. 9, or FIG. 10, when none of local wavelength division multiplexing optical link groups 220 are capable of exchanging a service optical signal, a third control method that includes step S310 to step S330 shown in FIG. 14 may be used.

S310: In response to second alarm information, send a fourth detection optical signal to a local downlink.

In this embodiment of this application, in the structure shown in FIG. 4, FIG. 6, FIG. 7, FIG. 9, or FIG. 10, when the second alarm information is received, it indicates that none of the local wavelength division multiplexing optical link groups 220 are capable of exchanging the service optical signal. Because a probability that all the local wavelength division multiplexing optical link groups 220 and all remote wavelength division multiplexing optical link groups 260 are faulty at the same time is very low, it may be determined, based on the second alarm information, that a transmission fault occurs on a main optical link 240. In this case, a local optical module assembly 210 integrates an OTDR detection function into any one of local downlinks in the plurality of local wavelength division multiplexing optical link groups 220. The fourth detection optical signal may be sent through the any one of the local downlinks that is integrated with the OTDR detection function.

S320: Input a second detection electrical signal from the local optical module assembly 210.

In this embodiment of this application, the fourth detection optical signal generates a second echo signal on the main optical link 240 and a corresponding local downlink and a corresponding remote downlink. The local optical module assembly 210 obtains the second detection electrical signal based on the second echo signal.

S330: Obtain an eighth fault indication signal based on the second detection electrical signal.

In this embodiment of this application, a location at which the transmission fault occurs may be determined based on a location of a transmit peak on the second detection electrical signal, and the eighth fault indication signal may be obtained based on the second detection electrical signal, where the eighth fault indication signal indicates a location at which the transmission fault occurs on the main optical link 240.

In this embodiment of this application, based on different received alarm information, the detection device X may perform the first detection method, the second detection method, and the third detection method, and output different fault indication signals to indicate that the transmission fault occurs on a corresponding optical link.

Embodiments of this application provide a detection device, a communication device, a detection method, and a communication system, to perform transmission fault detection on an optical transmission path. The optical transmission path includes an optical module assembly, a multiplexer/demultiplexer, a plurality of local wavelength division multiplexing optical link groups, a main optical link group, and a plurality of remote wavelength division multiplexing optical link groups, that are sequentially coupled. An OTDR detection function is integrated into the optical module assembly. The detection device X is coupled to the optical module assembly. In embodiments of this application, based on a feature that detection accuracy of the OTDR detection function is greater than filtering accuracy of the multiplexer/demultiplexer, the detection device may detect whether a filtering leakage optical signal exists on different links coupled to the multiplexer/demultiplexer, determine, based on a detection result, a specific location of a transmission fault, and output different fault indication signals to indicate an optical link on which the transmission fault is located. In embodiments of this application, the transmission fault can be detected and cross-link detection on the different optical links coupled to the multiplexer/demultiplexer can be implemented by using a conventional component that implements optical transmission based on the multiplexer/demultiplexer, without a need for an additional component. In embodiments of this application, low-cost, high-accuracy, and comprehensive detection on the transmission fault on the optical transmission path is implemented, and can be applicable to fronthaul networking in wireless communication, to implement comprehensive optical transmission fault detection.

An embodiment of this application further provides a computer-readable storage medium. The computer-readable storage medium includes instructions. When the instructions are run on a processor, the processor is enabled to perform the detection method (for example, the detection methods described in FIG. 11, FIG. 12, FIG. 13, and FIG. 14) recorded in the foregoing embodiments.

The processor in this embodiment of this application may be a chip. For example, the processor may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable logic device (programmable logic device, PLD), or another integrated chip.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments, and details are not described herein again.

In the several embodiments provided in this application, it should be understood that the disclosed system, device, and method may be implemented in other manners. For example, the described device embodiment is merely an example. For example, division into the modules is merely logical function division and may be other division in an actual implementation. For example, a plurality of modules or components may be combined or integrated into another device, or some features may be ignored or not performed. In addition, the displayed or discussed mutual couplings or direct couplings or communication connections may be implemented through some interfaces. The indirect couplings or communication connections between the devices or modules may be implemented in electronic, mechanical, or other forms.

The modules described as separate parts may or may not be physically separate, and parts displayed as modules may or may not be physical modules, that is, may be located in one device, or may be distributed on a plurality of devices. Some or all the modules may be selected according to actual requirements to achieve the objectives of the solutions of embodiments.

In addition, functional modules in embodiments of this application may be integrated into one device, or each of the modules may exist alone physically, or two or more modules are integrated into one device.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A detection device, configured to detect a transmission fault on an optical transmission path, wherein the optical transmission path comprises a local optical module assembly, a plurality of local wavelength division multiplexing optical link groups, a local multiplexer/demultiplexer, and a plurality of remote wavelength division multiplexing optical link groups, that are sequentially coupled, the plurality of local wavelength division multiplexing optical link groups are coupled to a plurality of filtering ends of the local multiplexer/demultiplexer, a multiplexing end of the local multiplexer/demultiplexer is coupled to the plurality of remote wavelength division multiplexing optical link groups, the local optical module assembly integrates an OTDR detection function, detection accuracy of the OTDR detection function is greater than filtering accuracy of the local multiplexer/demultiplexer, and the detection device is configured to:
in response to first alarm information, output different fault indication signals based on whether the local optical module assembly detects a filtering leakage optical signal from the plurality of local wavelength division multiplexing optical link groups based on the OTDR detection function, wherein the first alarm information indicates that a first local wavelength division multiplexing optical link group in the plurality of local wavelength division multiplexing optical link groups is incapable of exchanging a service optical signal, and the fault indication signal indicates that the transmission fault occurs on the first local wavelength division multiplexing optical link group or the transmission fault occurs on a first remote wavelength division multiplexing optical link group corresponding to the first local wavelength division multiplexing optical link group.

2. The detection device according to claim 1, wherein the first local wavelength division multiplexing optical link group comprises a first local uplink and a first local downlink, the first remote wavelength division multiplexing optical link group comprises a first remote uplink and a first remote downlink, the local optical module assembly integrates the OTDR detection function into any one of local downlinks in the plurality of local wavelength division multiplexing optical link groups, and outputting the different fault indication signals based on whether the local optical module assembly detects the filtering leakage optical signal from the plurality of local wavelength division multiplexing optical link groups based on the OTDR detection function comprises:
outputting a first fault indication signal when within a first time, a first electrical signal is not received from the local optical module assembly and a first leakage electrical signal is received, wherein the first fault indication signal indicates that the transmission fault occurs on the first local uplink, the first electrical signal indicates that a first optical signal is input to the local optical module assembly from the first remote uplink and the first local uplink within the first time, and the first leakage electrical signal indicates that the local optical module assembly detects a filtering leakage optical signal of the first optical signal from the any one of the local downlinks based on the OTDR detection function within the first time;
or
outputting a second fault indication signal when a first electrical signal and a first leakage electrical signal are not received from the local optical module assembly within a first time, wherein the second fault indication signal indicates that the transmission fault occurs on the first remote uplink.

3. The detection device according to claim 1, wherein the first local wavelength division multiplexing optical link group comprises a first local uplink and a first local downlink, the first remote wavelength division multiplexing optical link group comprises a first remote uplink and a first remote downlink, the local optical module assembly integrates the OTDR detection function into a second local downlink of a second local wavelength division multiplexing optical link group, and outputting the different fault indication signals based on whether the local optical module assembly detects the filtering leakage optical signal from the plurality of local wavelength division multiplexing optical link groups based on the OTDR detection function comprises:
controlling, within a second time after a first time, the local optical module assembly to output a first detection optical signal to the first local downlink; and
outputting a third fault indication signal when a first electrical signal is received from the local optical module assembly within the first time and a second leakage electrical signal is received from the local optical module assembly within the second time, wherein the third fault indication signal indicates that the transmission fault occurs on the first remote downlink, the first electrical signal indicates that a first optical signal is input to the local optical module assembly from the first remote uplink and the first local uplink within the first time, and the second leakage electrical signal indicates that the local optical module assembly detects the filtering leakage optical signal of the first detection optical signal from the second local downlink based on the OTDR detection function within the second time;
or
outputting a fourth fault indication signal when a first electrical signal is received from the local optical module assembly within the first time and a second leakage electrical signal is not received from the local optical module assembly within the second time, wherein the fourth fault indication signal indicates that the transmission fault occurs on the first local downlink.

4. The detection device according to claim 1, wherein the first local wavelength division multiplexing optical link group comprises a first local uplink and a first local downlink, the first remote wavelength division multiplexing optical link group comprises a first remote uplink and a first remote downlink, the local optical module assembly integrates the OTDR detection function into the first local downlink, and the detection device is further configured to:
when a first electrical signal is received from the local optical module assembly within a first time, control, within a second time after the first time, the local optical module assembly to send a second detection optical signal to the first local downlink, wherein the first electrical signal indicates that a first optical signal is input to the local optical module assembly from the first remote uplink and the first local uplink within the first time;
input a first detection electrical signal from the local optical module assembly, wherein the first detection electrical signal is an electrical signal obtained by the local optical module assembly based on the OTDR detection function and a first echo optical signal, and the first echo optical signal is an echo optical signal of the second detection optical signal; and
output a fifth fault indication signal based on the first detection electrical signal, wherein the fifth fault indication signal indicates a location at which the transmission fault occurs on the first remote downlink, or indicates a location at which the transmission fault occurs on the first local downlink.

5. The detection device according to claim 1, wherein the first local wavelength division multiplexing optical link group comprises a first local uplink/downlink multiplexing link, the first remote wavelength division multiplexing optical link group comprises a first remote uplink/downlink multiplexing link, the local optical module assembly integrates the OTDR detection function into a second local uplink/downlink multiplexing link of a second local wavelength division multiplexing optical link group, and outputting the different fault indication signals based on whether the local optical module assembly detects the filtering leakage optical signal from the plurality of local wavelength division multiplexing optical link groups based on the OTDR detection function comprises:
controlling the local optical module assembly to send a third detection optical signal to the first local uplink/downlink multiplexing link; and
outputting a sixth fault indication signal when a third leakage electrical signal is received from the local optical module assembly, wherein the sixth fault indication signal indicates that the transmission fault occurs on the first remote uplink/downlink multiplexing link, and the third leakage electrical signal indicates that the local optical module assembly detects the filtering leakage optical signal of the third detection optical signal from the second local uplink/downlink multiplexing link based on the OTDR detection function;
or
outputting a seventh fault indication signal when a third leakage electrical signal is not received from the local optical module assembly, wherein the seventh fault indication signal indicates that the transmission fault occurs on the first local uplink/downlink multiplexing link.

6. The detection device according to any one of claims 1 to 5, wherein the detection device is a communication device, and the detection device is further configured to:
exchange the service optical signal through the optical transmission path; and
in response to the first alarm information, stop exchanging the service optical signal.

7. The detection device according to any one of claims 1 to 5, wherein the detection device is an optical monitoring device, the local optical module assembly is further coupled to a communication device, the communication device exchanges the service optical signal through the optical transmission path, and the detection device is further configured to:
in response to the first alarm information, output a first control signal to the communication device, wherein the first control signal is used to control the communication device to stop exchanging the service optical signal.

8. The detection device according to any one of claims 1 to 7, wherein the optical transmission path further comprises a main optical link, the multiplexing end of the local multiplexer/demultiplexer is coupled to the plurality of remote wavelength division multiplexing optical link groups through the main optical link, the local optical module assembly integrates the OTDR detection function into any one of the local downlinks in the plurality of local wavelength division multiplexing optical link groups, and the detection device is further configured to:
in response to second alarm information, control the local optical module assembly to send a fourth detection optical signal to the any one of the local downlinks, wherein the second alarm information indicates that none of the plurality of local wavelength division multiplexing optical link groups and the plurality of remote wavelength division multiplexing optical link groups are capable of exchanging the service optical signal;
input a second detection electrical signal from the local optical module assembly, wherein the second detection electrical signal is an electrical signal obtained by the local optical module assembly based on the OTDR detection function and a second echo optical signal, and the second echo optical signal is an echo optical signal of the fourth detection optical signal; and
output an eighth fault indication signal based on the second detection electrical signal, wherein the eighth fault indication signal indicates a location at which the transmission fault occurs on the main optical link.

9. A communication device, configured to exchange a service optical signal through an optical transmission path, wherein the optical transmission path comprises a first optical module assembly, a plurality of first wavelength division multiplexing optical link groups, a multiplexer/demultiplexer, and a plurality of second wavelength division multiplexing optical link groups, that are sequentially coupled, each first wavelength division multiplexing optical link group comprises a first uplink and a first downlink, and the communication device is configured to:
in response to alarm information, control, within a first time, the first optical module assembly to send a first optical signal to an uplink of a first wavelength division multiplexing optical link group in the plurality of first wavelength division multiplexing optical link groups, wherein the alarm information indicates that the optical splitting link group in the plurality of first wavelength division multiplexing optical link groups is incapable of exchanging the service optical signal.

10. The communication device according to claim 9, wherein the communication device is further configured to:
in response to the alarm information, stop exchanging the service optical signal.

11. A detection method, for detecting a transmission fault on an optical transmission path, wherein the optical transmission path comprises a local optical module assembly, a plurality of local wavelength division multiplexing optical link groups, a local multiplexer/demultiplexer, and a plurality of remote wavelength division multiplexing optical link groups, that are sequentially coupled, the plurality of local wavelength division multiplexing optical link groups are coupled to a plurality of filtering ends of the local multiplexer/demultiplexer, a multiplexing end of the local multiplexer/demultiplexer is coupled to the plurality of remote wavelength division multiplexing optical link groups, the local optical module assembly integrates an OTDR detection function, detection accuracy of the OTDR detection function is greater than filtering accuracy of the local multiplexer/demultiplexer, and the method comprises:
in response to first alarm information, obtaining different fault indication signals based on whether the local optical module assembly detects a filtering leakage optical signal from the plurality of local wavelength division multiplexing optical link groups based on the OTDR detection function, wherein the first alarm information indicates that a first local wavelength division multiplexing optical link group in the plurality of local wavelength division multiplexing optical link groups is incapable of exchanging a service optical signal, and the fault indication signal indicates that the transmission fault occurs on the first local wavelength division multiplexing optical link group or the transmission fault occurs on a first remote wavelength division multiplexing optical link group corresponding to the first local wavelength division multiplexing optical link group.

12. The detection method according to claim 11, wherein the first local wavelength division multiplexing optical link group comprises a first local uplink and a first local downlink, the first remote wavelength division multiplexing optical link group comprises a first remote uplink and a first remote downlink, the local optical module assembly integrates the OTDR detection function into any one of local downlinks in the plurality of local wavelength division multiplexing optical link groups, and obtaining the different fault indication signals based on whether the local optical module assembly detects the filtering leakage optical signal from the plurality of local wavelength division multiplexing optical link groups based on the OTDR detection function comprises:
obtaining a first fault indication signal when within a first time, a first electrical signal is not received from the local optical module assembly and a first leakage electrical signal is received, wherein the first fault indication signal indicates that the transmission fault occurs on the first remote uplink, the first electrical signal indicates that a first optical signal is input to the local optical module assembly from the first remote uplink and the first local uplink within the first time, and the first leakage electrical signal indicates that the local optical module assembly detects the filtering leakage optical signal of the first optical signal from the any one of the local downlinks based on the OTDR detection function within the first time;
or
obtaining a second fault indication signal when a first electrical signal and a first leakage electrical signal are not received from the local optical module assembly within a first time, wherein the second fault indication signal indicates that the transmission fault occurs on the first local uplink.

13. The detection method according to claim 11, wherein the first local wavelength division multiplexing optical link group comprises a first local uplink and a first local downlink, the first remote wavelength division multiplexing optical link group comprises a first remote uplink and a first remote downlink, the local optical module assembly integrates the OTDR detection function into a second local downlink of a second local wavelength division multiplexing optical link group, and obtaining the different fault indication signals based on whether the local optical module assembly detects the filtering leakage optical signal from the plurality of local wavelength division multiplexing optical link groups based on the OTDR detection function comprises:
in response to the first alarm information, controlling, within a second time after a first time, the local optical module assembly to output a first detection optical signal to the first local downlink; and
obtaining a third fault indication signal when a first electrical signal is received from the local optical module assembly within the first time and a second leakage electrical signal is received from the local optical module assembly within the second time, wherein the third fault indication signal indicates that the transmission fault occurs on the first remote downlink, the first electrical signal indicates that a first optical signal is input to the local optical module assembly from the first remote uplink and the first local uplink within the first time, and the second leakage electrical signal indicates that the local optical module assembly detects the filtering leakage optical signal of the first detection optical signal from the second local downlink based on the OTDR detection function within the second time;
or
obtaining a fourth fault indication signal when a first electrical signal is received from the local optical module assembly within the first time and a second leakage electrical signal is not received from the local optical module assembly within the second time, wherein the fourth fault indication signal indicates that the transmission fault occurs on the first local downlink.

14. The detection method according to claim 11, wherein the first local wavelength division multiplexing optical link group comprises a first local uplink and a first local downlink, the first remote wavelength division multiplexing optical link group comprises a first remote uplink and a first remote downlink, the local optical module assembly integrates the OTDR detection function into the first local downlink, and the detection method further comprises:
in response to the first alarm information, when a first electrical signal is received from the local optical module assembly within a first time, controlling, within a second time after the first time, the local optical module assembly to send a second detection optical signal to the first local downlink, wherein the first electrical signal indicates that a first optical signal is input to the local optical module assembly from the first remote uplink and the first local uplink within the first time;
inputting a first detection electrical signal from the local optical module assembly, wherein the first detection electrical signal is an electrical signal obtained by the local optical module assembly based on the OTDR detection function and a first echo optical signal, and the first echo optical signal is an echo optical signal of the second detection optical signal; and
obtaining a fifth fault indication signal based on the first detection electrical signal, wherein the fifth fault indication signal indicates a location at which the transmission fault occurs on the first remote downlink, or indicates a location at which the transmission fault occurs on the first local downlink.

15. The detection method according to claim 11, wherein the first local wavelength division multiplexing optical link group comprises a first local uplink/downlink multiplexing link, the first remote wavelength division multiplexing optical link group comprises a first remote uplink/downlink multiplexing link, the local optical module assembly integrates the OTDR detection function into a second local uplink/downlink multiplexing link of a second local wavelength division multiplexing optical link group, and obtaining the different fault indication signals based on whether the local optical module assembly detects the filtering leakage optical signal from the plurality of local wavelength division multiplexing optical link groups based on the OTDR detection function comprises:
controlling the local optical module assembly to send a third detection optical signal to the first local uplink/downlink multiplexing link; and
outputting a sixth fault indication signal when a third leakage electrical signal is received from the local optical module assembly, wherein the sixth fault indication signal indicates that the transmission fault occurs on the first remote uplink/downlink multiplexing link, and the third leakage electrical signal indicates that the local optical module assembly detects the filtering leakage optical signal of the third detection optical signal from the second local uplink/downlink multiplexing link based on the OTDR detection function;
or
outputting a seventh fault indication signal when a third leakage electrical signal is not received from the local optical module assembly, wherein the seventh fault indication signal indicates that the transmission fault occurs on the first local uplink/downlink multiplexing link.

16. The detection method according to any one of claims 11 to 15, wherein the method is performed based on a communication device, and the method further comprises:
in response to the first alarm information, stopping exchanging the service optical signal.

17. The detection method according to any one of claims 11 to 15, wherein the method is performed based on an optical monitoring device, and the method further comprises:
in response to the first alarm information, outputting a first control signal to a communication device, wherein the first control signal is used to control the communication device to stop exchanging the service optical signal.

18. The detection method according to any one of claims 11 to 17, wherein the optical transmission path further comprises a main optical link, the multiplexing end of the local multiplexer/demultiplexer is coupled to the plurality of remote wavelength division multiplexing optical link groups through the main optical link, the local optical module assembly integrates the OTDR detection function into any one of the local downlinks in the plurality of local wavelength division multiplexing optical link groups, and the method further comprises:
in response to second alarm information, controlling the local optical module assembly to send a fourth detection optical signal to the any one of the local downlinks, wherein the second alarm information indicates that none of the plurality of local wavelength division multiplexing optical link groups and the plurality of remote wavelength division multiplexing optical link groups are capable of exchanging the service optical signal;
inputting a second detection electrical signal from the local optical module assembly, wherein the second detection electrical signal is an electrical signal obtained by the local optical module assembly based on the OTDR detection function and a second echo optical signal, and the second echo optical signal is an echo optical signal of the fourth detection optical signal; and
obtaining an eighth fault indication signal based on the second detection electrical signal, wherein the eighth fault indication signal indicates a location at which the transmission fault occurs on the main optical link.

19. A detection method, based on a communication device, wherein the communication device is configured to exchange a service optical signal through an optical transmission path, the optical transmission path comprises a first optical module assembly, a plurality of first wavelength division multiplexing optical link groups, a multiplexer/demultiplexer, and a plurality of second wavelength division multiplexing optical link groups, that are sequentially coupled, each local wavelength division multiplexing optical link group comprises a local uplink and a local downlink, and the method comprises:
in response to alarm information, controlling, within a first time, the first optical module assembly to send a first optical signal to an uplink of a first optical splitting link group in the plurality of first wavelength division multiplexing optical link groups, wherein the alarm information indicates that the optical splitting link group in the plurality of first wavelength division multiplexing optical link groups is incapable of exchanging the service optical signal.

20. The detection method according to claim 19, wherein the method further comprises:
in response to the alarm information, stopping exchanging the service optical signal.

21. A communication system, comprising a detection device and an optical transmission path, wherein the optical transmission path comprises a local optical module assembly, a plurality of local wavelength division multiplexing optical link groups, a local multiplexer/demultiplexer, a plurality of remote wavelength division multiplexing optical link groups, and a remote optical module assembly that are sequentially coupled, the plurality of local wavelength division multiplexing optical link groups are coupled to a plurality of filtering ends of the local multiplexer/demultiplexer, a multiplexing end of the local multiplexer/demultiplexer is coupled to the plurality of remote wavelength division multiplexing optical link groups, the local optical module assembly integrates an OTDR detection function, and detection accuracy of the OTDR detection function is greater than filtering accuracy of the local multiplexer/demultiplexer;
the optical transmission path is used for exchanging a service optical signal; and
the detection device is configured to: exchange the service optical signal with a remote communication device; and in response to local alarm information, output different fault indication signals based on whether the local optical module assembly detects a filtering leakage optical signal from the plurality of local wavelength division multiplexing optical link groups based on the OTDR detection function, wherein the local alarm information indicates that a first local wavelength division multiplexing optical link group in the plurality of local wavelength division multiplexing optical link groups is incapable of exchanging the service optical signal, and the fault indication signal indicates that a transmission fault occurs on the first local wavelength division multiplexing optical link group or a transmission fault occurs on a first remote wavelength division multiplexing optical link group corresponding to the first local wavelength division multiplexing optical link group.

22. The communication system according to claim 21, wherein the first local wavelength division multiplexing optical link group comprises a first local uplink and a first local downlink, the first remote wavelength division multiplexing optical link group comprises a first remote uplink and a first remote downlink, the local optical module assembly integrates the OTDR detection function into any one of local downlinks in the plurality of local wavelength division multiplexing optical link groups, the communication system further comprises the remote communication device and a remote optical module, and the remote communication device is coupled to the plurality of remote wavelength division multiplexing optical link groups through the remote optical module;
the remote communication device is configured to: in response to remote alarm information, control, within a first time, the remote optical module assembly to send a first optical signal to the first remote uplink, wherein the remote alarm information indicates that the first remote wavelength division multiplexing optical link group is incapable of exchanging the service optical signal; and
the detection device is configured to: in response to the local alarm information, output the different fault indication signals; and
output a first fault indication signal when within the first time, a first electrical signal is not received from the local optical module assembly and a first leakage electrical signal is received, wherein the first fault indication signal indicates that the transmission fault occurs on the first remote uplink, the first electrical signal indicates that the first optical signal is input to the local optical module assembly from the first remote uplink and the first local uplink, and the first leakage electrical signal indicates that the local optical module assembly detects the filtering leakage optical signal of the first optical signal from the any one of the local downlinks based on the OTDR detection function;
or
output a second fault indication signal when a first electrical signal and a first leakage electrical signal are not received from the local optical module assembly within the first time, wherein the second fault indication signal indicates that the transmission fault occurs on the first local uplink.

23. The communication system according to claim 21, wherein the first local wavelength division multiplexing optical link group comprises a first local uplink and a first local downlink, the first remote wavelength division multiplexing optical link group comprises a first remote uplink and a first remote downlink, and the local optical module assembly integrates the OTDR detection function into a second local downlink of a second local wavelength division multiplexing optical link group;
the remote communication device is configured to: in response to a remote alarm information, control, within a first time, the remote optical module assembly to send a first optical signal to the first remote uplink, wherein the remote alarm information indicates that the first remote wavelength division multiplexing optical link group is incapable of exchanging the service optical signal; and
the detection device is configured to:
in response to the local alarm information, control, within a second time after the first time, the local optical module assembly to output a first detection optical signal to the first local downlink; and
output a third fault indication signal when a first electrical signal is received from the local optical module assembly within the first time and a second leakage electrical signal is received from the local optical module assembly within the second time, wherein the third fault indication signal indicates that the transmission fault occurs on the first remote downlink, the first electrical signal indicates that the first optical signal is input to the local optical module assembly from the first remote uplink and the first local uplink within the first time, and the second leakage electrical signal indicates that the local optical module assembly detects the filtering leakage optical signal of the first detection optical signal from the second local downlink based on the OTDR detection function within the second time; or
output a fourth fault indication signal when a first electrical signal is received from the local optical module assembly within the first time and a second leakage electrical signal is not received from the local optical module assembly within the second time, wherein the fourth fault indication signal indicates that the transmission fault occurs on the first local downlink.

24. The communication system according to any one of claims 21 to 23, wherein the detection device is a local communication device, and the detection device is further configured to:
in response to the local alarm information, stop exchanging the service optical signal with the optical transmission path.

25. The communication system according to any one of claims 21 to 23, wherein the detection device is an optical monitoring device, the communication system further comprises a local communication device, and the detection device is further configured to:
in response to the local alarm information, output a first control signal to the local communication device, wherein the first control signal is used to control the communication device to stop exchanging the service optical signal.

26. A computer-readable storage medium, wherein the computer-readable storage medium comprises instructions, and when the instructions are run on a processor, the processor is enabled to perform the method according to any one of claims 11 to 18, or perform the method according to claim 19 or 20.
